# EUROPEAN PATENT APPLICATION

(11) **EP 4 848 395 A1**
(43) Date of publication of application: **02.12.2026**
(21) Application number: 24922866.9
(22) Date of filing: 07.02.2024
(51) Int. Cl.: H01M 10/0566, H01M 50/333, H01M 50/30

(54) **BATTERY CELL, BATTERY AND ELECTRIC DEVICE**

(71) Applicant: Contemporary Amperex Technology Co., Limited, Ningde, Fujian 352100 (CN)
(72) Inventor: MENG, Wanqiu, Ningde, Fujian 352100 (CN); YE, Yonghuang, Ningde, Fujian 352100 (CN); HUANG, Lei, Ningde, Fujian 352100 (CN); WU, Zeli, Ningde, Fujian 352100 (CN); XUE, Longfei, Ningde, Fujian 352100 (CN); ZHANG, Xiaoxi, Ningde, Fujian 352100 (CN)
(74) Representative: Ziebig Hengelhaupt Intellectual Property Attorneys Patentanwaltskanzlei PartGmbB
(86) International application number: PCT/CN2024/076635
(87) International publication number: WO 2025/166626

(57) **Abstract**

A battery cell (20), a battery (100), and an electric device. The battery cell (20) comprises a shell (22), a venting assembly (90) and an electrolyte solution, wherein the venting assembly (90) is arranged on a wall and used for discharging gas from the shell (22); an accommodating cavity (221) is filled with the electrolyte solution; and the electrolyte solution comprises a first component, the first component comprising one of or a mixture of two or more of dimethyl carbonate, 2-methyltetrahydrofuran, diethylene glycol dimethylether, succinonitrile, glutaronitrile, methyl formate, ethyl formate, methyl acetate, ethyl acetate, methyl acrylate, dimethyl sulfite, diethyl sulfide, ethyl methyl sulfide and 3-methyl-2-butane. By means of such configurations, a balance between high battery performance requirement and high gas generation volume can be achieved.

## Description

### TECHNICAL FIELD

The present application relates to the field of new energy technologies, and in particular, to a battery cell, a battery, and an electric device.

### BACKGROUND

With the continuous intensification of global energy and environmental issues, new energy, as one of the fields of sustainable development, is developing rapidly. Batteries, as a new form of energy, are being applied more and more widely, and high requirements are imposed on their operation safety and service life. During charge and discharge of a battery cell, generation of internal gas of the battery cell causes an increase in internal pressure of the battery cell, which reduces the safety of the battery cell and shortens the service life of the battery cell. The foregoing statements are merely provided to present background technical information related to the present application and do not necessarily constitute prior art.

### SUMMARY

The main technical problem solved by the present application is to provide a battery cell, a battery, and an electric device, which can discharge internal gas of the battery cell to the outside of the housing of the battery cell in a timely manner, maintain the pressure inside the battery cell within a normal level, improve the safety performance of the battery cell, and greatly extend the service life of the battery cell.

In order to solve the above technical problem, a technical solution adopted by the present application is to provide a battery cell, the battery cell includes a housing, a venting assembly, and an electrolyte solution, where the venting assembly is disposed on a wall portion, and the venting assembly is configured to discharge internal gas of the housing; the electrolyte solution is filled in an accommodating cavity; the electrolyte solution includes a first component, and the first component includes one of or a mixture of two or more of dimethyl carbonate, 2-methyltetrahydrofuran, diethylene glycol dimethyl ether, diethylene glycol dimethyl ether, succinonitrile, glutaronitrile, methyl formate, ethyl formate, methyl acetate, ethyl acetate, methyl acrylate, dimethyl sulfite, diethyl sulfite, ethyl methyl sulfite, 3-methyl-2-butanone, and 3-methyl-2-butanone. Through such a configuration, a contradiction between high battery performance requirement and high gas generation volume can be balanced, and the safety performance and service life of the battery cell can be taken into account while improving the charging capability and energy density of the battery cell.

In one embodiment, based on a total mass of the electrolyte solution, a content of the first component is 5% to 85%. Through such a configuration, regulating the electrolyte solution with different component contents can balance the contradiction between high performance requirement and high gas generation volume.

In one embodiment, the content of the first component is 15% to 35%. Through such a configuration, the contradiction between high performance requirement and high gas generation volume can be balanced.

In one embodiment, based on the total mass of the electrolyte solution, the content of the first component is 65% to 85%. Through such a configuration, the safety performance and service life of the battery cell can be taken into account while improving the charging capability and energy density of the battery cell.

In one embodiment, the battery cell further includes an electrode assembly, where the electrode assembly is accommodated in the accommodating cavity, the electrode assembly includes a negative electrode sheet, the negative electrode sheet includes a negative electrode active material, and the negative electrode active material includes a silicon-based material. Through such a configuration, the safety performance and service life of the battery cell can be taken into account while improving the energy density of the battery cell.

In one embodiment, based on a total mass of the negative electrode active material, a silicon content is lower than or equal to 5%, the electrolyte solution further includes fluoroethylene carbonate, and based on the total mass of the electrolyte solution, a content of the fluoroethylene carbonate is lower than or equal to 3%. Through such a configuration, swelling of the silicon negative electrode can be suppressed, performance of the battery cell can be improved, and internal gas of the battery cell can be discharged in a timely manner.

In one embodiment, based on a total mass of the negative electrode active material, a silicon content is higher than 5%, the electrolyte solution further includes fluoroethylene carbonate, and based on the total mass of the electrolyte solution, a content of the fluoroethylene carbonate is higher than 3%. Through such a configuration, swelling of the silicon negative electrode can be suppressed, and safety performance and service life of the battery cell can be taken into account while improving the energy density of the battery cell.

In one embodiment, the battery cell further includes an electrode assembly, where the electrode assembly is accommodated in the accommodating cavity, the electrode assembly includes a positive electrode sheet, the positive electrode sheet includes a positive electrode active material, the positive electrode active material includes a first type of material, the first type of material includes a first ternary material, and a mass content of nickel in the first ternary material is not lower than 50% and lower than 100%. Through such a configuration, a higher specific capacity per gram can be obtained, and the energy density of the battery cell is increased accordingly.

In one embodiment, a median particle size Dv50 of the first ternary material is 2 µm to 4 µm. Through such a configuration, a contact area between the ternary material and the electrolyte solution can be reduced, and the amount of gas generated can be reduced.

In one embodiment, a mass content of cobalt in the first ternary material is 12% to 18%. By regulating the mass content of cobalt, the stability of the positive electrode active material can be enhanced.

In one embodiment, based on a total mass of the positive electrode active material, a content of the first ternary material is higher than or equal to 50%. Controlling the content of the first ternary material helps to reduce the cost of the positive electrode material on the basis of increasing the energy density.

In one embodiment, the first ternary material includes one or more of single crystal particles and polycrystalline particles. Through such a configuration, the capacity can be increased and the gas generation volume can be reduced.

In one embodiment, the positive electrode active material further includes a lithium manganese iron phosphate material. Through such a configuration, the capacity can be increased and the cost can be reduced.

In one embodiment, a thickness of the positive electrode active material is greater than or equal to 130 µm. This can increase loading of the electrode and improve the energy density of the battery.

In one embodiment, the venting assembly includes a gas permeable membrane assembly, the gas permeable membrane assembly includes a gas permeable membrane, and a gas permeation rate of the gas permeable membrane is 0.025 mL/day to 8 mL/day. This can discharge internal gas of the battery cell in a timely manner, and block external impurities (air, moisture, dust, and the like) from entering the interior of the battery cell.

In one embodiment, the gas permeable membrane assembly includes the gas permeable membrane and a connecting member, where the connecting member is provided with a first gas permeable hole, the gas permeable membrane is disposed on the connecting member and covers the first gas permeable hole, and the gas permeable membrane is configured to allow internal gas of the battery cell to pass through the gas permeable membrane and be discharged. This can enhance the connection strength of the gas permeable membrane assembly and reduce the risk of deformation of the gas permeable membrane.

In one embodiment, the venting assembly includes a one-way valve, where an opening pressure of the one-way valve is greater than or equal to 0.2 MPa; optionally, greater than or equal to 0.4 MPa; and further optionally, greater than or equal to 0.8 MPa. This can adapt to different application scenarios and different venting requirements by regulating the valve opening pressure.

In one embodiment, the venting assembly includes the gas permeable membrane assembly and the one-way valve, the wall portion has a first vent hole, the first vent hole communicates the interior of the housing with the exterior of the housing, and the battery cell is configured such that gas discharged through the first vent hole flows through the one-way valve and the gas permeable membrane assembly. In this case, the gas permeable membrane assembly and the one-way valve are arranged in series. The one-way valve can protect the tightness of the battery cell system and reduce the probability that external water vapor enters the battery cell system. In addition, the gas permeable membrane can block the overflow of the electrolyte solution and seal the battery cell system when the one-way valve is opened.

In one embodiment, the wall portion has an outer surface and an inner surface that are arranged opposite to each other, where the outer surface is arranged toward the exterior of the housing, and the inner surface is arranged toward the interior of the housing; the wall portion is provided with a first vent hole, and the first vent hole includes a through hole section and a first hole section, where the through hole section and the first hole section are arranged along a thickness direction of the wall portion, the through hole section communicates the interior of the housing with the exterior of the housing, the first hole section is located on a side of the through hole section away from the interior of the housing, an aperture of the first hole section is larger than an aperture of the through hole section, and the one-way valve is at least partially accommodated in the first hole section. This facilitates the assembly of the one-way valve.

In one embodiment, at least a portion of a valve body of the one-way valve protrudes from the outer surface; the wall portion has a first recessed platform recessed relative to the inner surface, the first recessed platform is arranged around the first vent hole, and the gas permeable membrane assembly is at least partially accommodated in the first recessed platform. This can reduce the installation height of the venting assembly.

In one embodiment, at least a portion of a valve body of the one-way valve protrudes from the outer surface of the wall portion; the first vent hole further includes a second hole section, along the thickness direction of the wall portion, the second hole section is located between the through hole section and the first hole section, an aperture of the second hole section is smaller than an aperture of the first hole section, the aperture of the second hole section is larger than the aperture of the through hole section, the gas permeable membrane assembly is at least partially accommodated in the second hole section, and the gas permeable membrane assembly is located on a side of the one-way valve facing the wall portion. This facilitates the assembly of the venting assembly.

In one embodiment, the one-way valve includes a valve body, at least a portion of the valve body protrudes from the inner surface of the wall portion, the valve body includes a valve seat and a valve cover, the valve seat includes a seat bottom wall and a seat side wall connected to the seat bottom wall; the valve cover is disposed at an end of the valve seat away from the seat bottom wall, the valve cover, the seat side wall, and the seat bottom wall enclose a valve cavity, and a gas inlet of the valve cavity is provided on the valve seat; where the gas permeable membrane assembly is disposed on a side of the seat bottom wall away from the valve cavity; or the gas permeable membrane assembly is disposed on a side of the seat bottom wall facing the valve cavity. This can reduce the installation height of the venting assembly.

In one embodiment, the venting assembly includes the gas permeable membrane assembly and the one-way valve, the wall portion has a first vent hole and a second vent hole that are spaced apart, the first vent hole and the second vent hole respectively communicate the interior of the housing with the exterior of the housing, the battery cell is configured such that gas discharged through the first vent hole flows through the one-way valve, and gas discharged through the second vent hole flows through the gas permeable membrane assembly. In this case, the gas permeable membrane assembly and the one-way valve are arranged in parallel, and the two can discharge gas simultaneously to achieve a relatively large venting rate.

In one embodiment, the one-way valve includes a valve body and a valve core, where the valve body has a valve cavity inside, the valve body is provided with a gas inlet and a gas outlet, the gas inlet is configured to communicate the valve cavity with the interior of the housing, and the gas outlet is configured to communicate the valve cavity with the exterior of the housing; and the valve core is disposed in the valve cavity, the valve core is configured to block a gas inlet channel of the valve cavity, and the valve core is configured to open the gas inlet channel under the action of internal gas of the housing. This facilitates the discharge of gas.

In order to solve the above technical problem, another technical solution adopted by the present application is to provide a battery. The battery includes the battery cell described above, and the battery has at least the same advantages as the battery cell.

In order to solve the above technical problem, another technical solution adopted by the present application is to provide an electric device. The electric device includes the battery described above, and the electric device has at least the same advantages as the battery.

The above description is only an overview of the technical solutions of the present application. In order to understand the technical means of the present application more clearly, the present application can be implemented in accordance with the content of the description. In order to make the above and other objectives, features, and advantages of the present application more obvious and understandable, the specific embodiments of the present application are set forth below.

### BRIEF DESCRIPTION OF DRAWINGS

In order to illustrate the technical solutions in the embodiments of the present application more clearly, the accompanying drawings required for use in the description of the embodiments will be briefly introduced below. Obviously, the accompanying drawings in the following description are only some embodiments of the present application. For those of ordinary skill in the art, other drawings may also be obtained according to these drawings without creative effort.
FIG. 1 is a schematic exploded structural view of a battery cell according to one or more embodiments;
FIG. 2 is a schematic exploded structural view of a battery cell according to one or more embodiments;
FIG. 3 is a schematic cross-sectional structural view of a one-way valve according to one or more embodiments;
FIG. 4 is a schematic partially exploded structural view of a battery cell according to one or more embodiments;
FIG. 5 is a schematic front view of a one-way valve according to one or more embodiments;
FIG. 6 is a schematic exploded structural view of a one-way valve according to one or more embodiments;
FIG. 7 is a schematic partial cross-sectional structural view of a battery cell according to one or more embodiments;
FIG. 8 is a schematic front view of a one-way valve according to one or more embodiments;
FIG. 9 is a schematic exploded structural view of a one-way valve according to one or more embodiments;
FIG. 10 is a schematic partial cross-sectional structural view of a battery cell according to one or more embodiments;
FIG. 11 is a schematic cross-sectional structural view of a gas permeable membrane assembly according to one or more embodiments;
FIG. 12 is a schematic partial cross-sectional structural view of an end cap according to one or more embodiments;
FIG. 13 is a schematic partial cross-sectional structural view of a battery cell according to one or more embodiments;
FIG. 14 is a schematic partial front view of a battery cell according to one or more embodiments;
FIG. 15 is a schematic partial cross-sectional structural view of an end cap according to one or more embodiments;
FIG. 16 is a schematic partial cross-sectional structural view of a battery cell according to one or more embodiments;
FIG. 17 is a schematic partial front view of a battery cell according to one or more embodiments;
FIG. 18 is a schematic exploded structural view of a venting assembly according to one or more embodiments;
FIG. 19 is a schematic cross-sectional structural view of a venting assembly according to one or more embodiments;
FIG. 20 is a schematic exploded structural view of a venting assembly according to one or more embodiments;
FIG. 21 is a schematic cross-sectional structural view of a venting assembly according to one or more embodiments;
FIG. 22 is a schematic exploded structural view of a venting assembly according to one or more embodiments;
FIG. 23 is a schematic cross-sectional structural view of a venting assembly according to one or more embodiments.
FIG. 24 is a schematic exploded structural view of a battery according to one or more embodiments; and
FIG. 25 is a schematic structural view of a vehicle according to one or more embodiments.

In the drawings:
1000: vehicle; 300: motor; 200: controller; 100: battery; 10: case; 11: first part; 12: second part; 20: battery cell; 21: end cap; 21a: outer surface; 21b: inner surface; 291: first vent hole; 22: shell; 221: accommodating cavity; 23: electrode assembly; 24: insulating member; 293: second vent hole; 25: electrode terminal; 90: venting assembly; 30: one-way valve; 31: valve body; 311: valve seat; 3111: first through hole; 3114: fourth through hole; 3115: seat bottom wall; 3116: seat side wall; 312: valve cover; 3121: cover top wall; 3122: cover side wall; 31221: second through hole; 3123: fifth through hole; 313: valve cavity; 313a: gas inlet; 313b: gas outlet; 32: valve core; 321: blocking member; 3211: sealing portion; 3212: pressing portion; 322: elastic member; 40: gas permeable membrane assembly; 41: gas permeable membrane; 42: metal member; 491: first gas permeable hole; 43: backing member; 70: pressure relief mechanism; T1: first annular table surface; T2: second annular table surface; T3: transition surface; and S1: first recessed platform.

### DESCRIPTION OF EMBODIMENTS

In order to make the objectives, technical solutions, and effects of the present application clearer and more definite, the embodiments of the technical solutions of the present application will be described in detail below in conjunction with the accompanying drawings. The following embodiments are only used to illustrate the technical solutions of the present application more clearly, and are therefore only used as examples and shall not be construed as limiting the protection scope of the present application.

Unless otherwise defined, all technical and scientific terms used herein have the same meaning as those commonly understood by those skilled in the technical field to which the present application belongs; the terms used herein are only for the purpose of describing specific embodiments and are not intended to limit the present application; the terms "include" and "have" and any variations thereof in the description and claims of the present application and the above drawings are intended to cover non-exclusive inclusion.

In the description of the embodiments of the present application, the technical terms "first", "second", and the like are only used to distinguish different objects and cannot be understood as indicating or implying relative importance or implicitly indicating the number, specific order, or primary-secondary relationship of the indicated technical features. In the description of the embodiments of the present application, the term "plurality" refers to two or more (including two), and similarly, "multiple groups" refers to two or more groups (including two groups), and "multiple sheets" refers to two or more sheets (including two sheets), unless otherwise clearly and specifically limited.

Reference to "embodiment" herein means that a specific feature, structure, or characteristic described in conjunction with the embodiment may be included in at least one embodiment of the present application. The appearance of the phrase in various positions in the description does not necessarily refer to the same embodiment, nor is it an independent or alternative embodiment that is mutually exclusive with other embodiments. It is explicitly and implicitly understood by those skilled in the art that the embodiments described herein may be combined with other embodiments.

In the description of the embodiments of the present application, the term "and/or" is only a description of an association relationship of associated objects, indicating that three relationships may exist. For example, A and/or B may indicate three situations: A exists alone, A and B exist simultaneously, and B exists alone. In addition, the character "/" in this document generally indicates that the front and rear associated objects are in an "or" relationship.

Quantities, ratios, and other numerical values are presented herein in a range format. It should be understood that such range formats are for convenience and brevity and should be flexibly understood to include not only the numerical values explicitly specified as range limits but also all individual numerical values or sub-ranges encompassed within the stated range, as if each numerical value and sub-range were explicitly specified.

In the description of the embodiments of the present application, the same reference numerals indicate the same components, and for the sake of brevity, detailed descriptions of the same components are omitted in different embodiments. It should be understood that the thickness, length and width, and other dimensions of various components in the embodiments of the present application shown in the accompanying drawings, as well as the overall thickness, length and width, and other dimensions of the integrated device are only exemplary illustrations and should not constitute any limitation on the present application.

In the description of the embodiments of the present application, the orientation or positional relationships indicated by the technical terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like are based on the orientation or positional relationships shown in the accompanying drawings, and are only for the convenience of describing the embodiments of the present application and simplifying the description, and do not indicate or imply that the device or element referred to must have a specific orientation, be constructed and operated in a specific orientation, and therefore cannot be understood as a limitation on the embodiments of the present application.

In the description of the embodiments of the present application, unless otherwise clearly specified and limited, the technical terms "installation", "connection", " coupling", "fixation", and the like should be understood in a broad sense. For example, it can be a fixed connection, a detachable connection, or an integral connection; it can be a mechanical connection or an electrical connection; it can be a direct connection or an indirect connection through an intermediate medium, and it can be the internal communication of two elements or the interaction relationship between two elements. For those of ordinary skill in the art, the specific meanings of the above terms in the embodiments of the present application can be understood according to specific circumstances.

Batteries are widely used in the field of new energy, mainly including electric vehicles, energy storage systems, and renewable energy. In the field of electric vehicles, higher performance such as longer driving range and faster charging has been gradually achieved. In terms of energy storage systems, batteries are widely used in large-scale and distributed energy storage. They can balance grid loads, store renewable energy such as solar energy and wind energy, and release stored energy during peak periods. In addition, small rechargeable batteries are also widely used in wearable devices, drones, and smart homes.

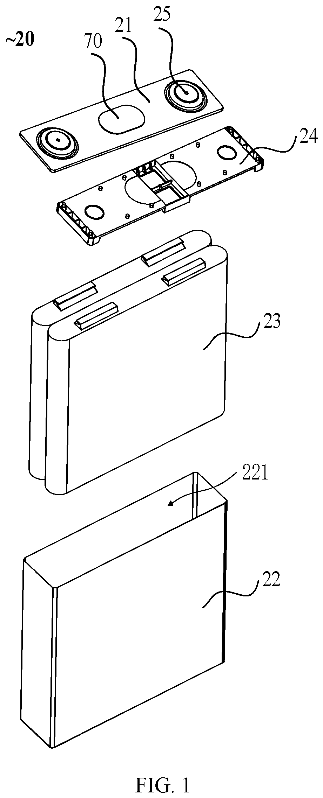

Referring to FIG. 1. FIG. 1 is a schematic exploded structural view of a battery cell according to one or more embodiments. The battery cell 20 is the smallest unit that constitutes a battery. As shown in FIG. 1, the battery cell 20 includes an end cap 21, a shell 22, an electrode assembly 23, and other functional components.

The end cap 21 refers to a component that covers an opening of the shell 22 to isolate the internal environment of the battery cell 20 from the external environment. Without limitation, the shape of the end cap 21 can be adapted to the shape of the shell 22 to fit the shell 22. Optionally, the end cap 21 may be made of a material with certain hardness and strength (such as aluminum alloy). In this way, the end cap 21 is not prone to deformation when subjected to extrusion or collision, so that the battery cell 20 can have higher structural strength and the safety performance may also be improved. Functional components such as electrode terminals 25 may be provided on the end cap 21. The electrode terminals 25 may be configured to electrically connect to the electrode assembly 23 to output or input electric energy of the battery cell 20. Exemplarily, the battery cell 20 is provided with two electrode terminals 25, and the two electrode terminals 25 are both installed on the end cap 21. The two electrode terminals 25 are respectively configured to electrically connect to two tabs of opposite polarities of the electrode assembly 23 to realize the output or input of the positive electrode and the negative electrode of the battery cell 20 respectively. In some embodiments, a pressure relief mechanism 70 for relieving internal pressure when the internal pressure or temperature of the battery cell 20 reaches a threshold may also be provided on the end cap 21. The end cap 21 may also be made of various materials, such as copper, iron, aluminum, stainless steel, aluminum alloy, and plastic, which are not particularly limited in the embodiments of the present application. In some embodiments, an insulating member 24 may also be provided on the inner side of the end cap 21. The insulating member 24 may be configured to isolate the electrical connection components in the shell 22 from the end cap 21 to reduce the risk of short circuit. Exemplarily, the insulating member may be plastic, rubber, or the like.

The shell 22 is a component configured to cooperate with the end cap 21 to form the internal environment of the battery cell 20, where the formed internal environment may be used to accommodate the electrode assembly 23, the electrolyte solution, and other components. The shell 22 and the end cap 21 may be independent components. An opening may be provided on the shell 22, and the end cap 21 may cover the opening at the opening to form the internal environment of the battery cell 20. Without limitation, the end cap 21 and the shell 22 may also be integrated. Specifically, the end cap 21 and the shell 22 may first form a common connection surface before other components are placed into the housing. When the interior of the shell 22 needs to be encapsulated, the end cap 21 is then used to cover the shell 22. The shell 22 may have various shapes and various sizes, such as a rectangular parallelepiped shape, a cylindrical shape, or a hexagonal prism shape. Specifically, the shape of the shell 22 may be determined according to the specific shape and size of the electrode assembly 23. The material of the shell 22 may be various, such as copper, iron, aluminum, stainless steel, aluminum alloy, and plastic. The embodiments of the present application do not impose special restrictions on this.

The electrode assembly 23 is a component in the battery cell 20 where electrochemical reactions occur. The shell 22 may contain one or more electrode assemblies 23. The electrode assembly 23 is mainly formed by winding or stacking a positive electrode sheet and a negative electrode sheet, and a separator is usually provided between the positive electrode sheet and the negative electrode sheet. The portions of the positive electrode sheet and the negative electrode sheet with active materials constitute the main body of the electrode assembly, and the portions of the positive electrode sheet and the negative electrode sheet without active materials respectively constitute tabs. The positive tab and the negative tab may be located together at one end of the main body or respectively at two ends of the main body. During charge and discharge of the battery, the positive active material and the negative active material react with the electrolyte, and the tabs are connected to the electrode terminals to form a current loop.

In one embodiment, the positive electrode sheet includes a positive electrode current collector and a positive electrode active layer disposed on at least one side of the positive electrode current collector, and the positive electrode active layer includes a positive active material.

As an example, the positive electrode current collector has two surfaces opposite in its own thickness direction, and the positive electrode active layer may be disposed on any one or both of the two opposite surfaces of the positive electrode current collector.

In one embodiment, the positive electrode current collector may be a metal foil or a composite current collector. For example, as a metal foil, aluminum foil may be used. The composite current collector may include a polymer material base layer and a metal layer formed on at least one surface of the polymer material base layer. The composite current collector may be formed by forming a metal material (aluminum, aluminum alloy, nickel, nickel alloy, titanium, titanium alloy, silver, silver alloy, and the like) on a polymer material substrate (such as polypropylene (PP), polyethylene terephthalate (PET), polybutylene terephthalate (PBT), polystyrene (PS), and polyethylene (PE)).

In one embodiment, the positive electrode active layer includes a positive active material, and the positive active material may include at least one of the following materials: lithium-containing phosphate with an olivine structure, spinel lithium-containing nickel-manganese composite oxide, lithium transition metal oxide, and their respective modified compounds. However, the present application is not limited to these materials, and other conventional materials that may be used as positive active materials for batteries may also be used. These positive active materials may be used alone or may be used in combination of two or more. Examples of lithium transition metal oxides may include but are not limited to at least one of lithium cobalt oxide (such as LiCoO₂), lithium nickel oxide (such as LiNiO₂), lithium manganese oxide (such as LiMnO₂, LiMn₂O₄), lithium nickel cobalt oxide, lithium manganese cobalt oxide, lithium nickel manganese oxide, lithium nickel cobalt manganese oxide (such as LiNi_{1/3}Co_{1/3}Mn_{1/3}O₂ (which may also be referred to as NCM₃₃₃), LiNi_{0.5}Co_{0.2}Mn_{0.3}O₂ (which may also be referred to as NCM₅₂₃), LiNi_{0.5}Co_{0.25}Mn_{0.25}O₂ (which may also be referred to as NCM₂₁₁), LiNi_{0.6}Co_{0.2}Mn_{0.2}O₂ (which may also be referred to as NCM₆₂₂), LiNi_{0.8}Co_{0.1}Mn_{0.1}O₂ (which may also be referred to as NCM₈₁₁), lithium nickel cobalt aluminum oxide (such as LiNi_{0.85}Co_{0.15}Al_{0.05}O₂), and their modified compound. Examples of lithium-containing phosphates with an olivine structure may include but are not limited to at least one of lithium iron phosphate (such as LiFePO₄ (which may also be referred to as LFP)), a composite material of lithium iron phosphate and carbon, lithium manganese phosphate (such as LiMnPO₄), a composite material of lithium manganese phosphate and carbon, lithium manganese iron phosphate, and a composite material of lithium manganese iron phosphate and carbon. The positive electrode material may further include positive active materials commonly used in sodium metal batteries and potassium metal batteries.

In one embodiment, the negative electrode sheet includes a negative electrode current collector and a negative electrode active layer disposed on at least one surface of the negative electrode current collector, where the negative electrode active layer includes a negative electrode active material. In this embodiment, the battery cell is an ion battery. During charge and discharge of the battery, active ions (for example, Li⁺) are intercalated/deintercalated in the negative active material.

As an example, the negative electrode current collector has two surfaces opposite in its own thickness direction, and the negative electrode film layer may be disposed on any one or both of the two opposite surfaces of the negative electrode current collector.

In one embodiment, the negative electrode current collector may be a metal foil or a composite current collector. For example, as a metal foil, copper foil may be used. The composite current collector may include a polymer material base layer and a metal layer formed on at least one surface of the polymer material substrate. The composite current collector may be obtained by forming a metal material (copper, copper alloy, nickel, nickel alloy, titanium, titanium alloy, silver, silver alloy, and the like) on a polymer material substrate (such as polypropylene (PP), polyethylene terephthalate (PET), polybutylene terephthalate (PBT), polystyrene (PS), and polyethylene (PE)).

The negative active material includes, but is not limited to, carbon-based negative electrode materials, silicon-based negative electrode materials, tin-based negative electrode materials, lithium titanate negative electrode materials, and metallic lithium negative electrode materials; specifically including, but not limited to, graphite materials, silicon-carbon materials, graphite-silicon monoxide materials, nano-silicon materials, silicon monoxide materials, and tin-based materials; and more specifically including one or more of natural graphite, artificial graphite, mesocarbon microbeads (referred to as MCMB), hard carbon, soft carbon, silicon, silicon-carbon composites, Li-Sn alloys, Li-Sn-O alloys, Sn, SnO, SnO₂, spinel-structured lithiated TiO₂-Li₄Ti₅O₁₂, and Li-Al alloys.

In some embodiments, the positive electrode active layer and the negative electrode active layer may further include a binder, a conductive agent, and other optional auxiliaries. As an example, the conductive agent may be one or more of super conductive carbon, acetylene black, carbon black, Ketjen black, carbon dots, carbon nanotubes, Super P (SP), graphene, and carbon nanofibers. As an example, the binder may be one or more of styrene-butadiene rubber (SBR), water-based acrylic resin (water-based acrylic resin), polyvinylidene fluoride (PVDF), polytetrafluoroethylene (PTFE), ethylene-vinyl acetate copolymer (EVA), polyacrylic acid (PAA), carboxymethyl cellulose (CMC), polyvinyl alcohol (PVA), and polyvinyl butyral (PVB). As an example, other optional auxiliaries may be thickening and dispersing agents (such as sodium carboxymethyl cellulose CMC-Na) and PTC thermistor materials.

In some embodiments, the material of the separator may be selected from at least one of glass fiber, non-woven fabric, polyethylene, polypropylene, and polyvinylidene fluoride. The separator may be a single-layer film or a multi-layer composite film, with no particular limitation. When the separator is a multi-layer composite film, the materials of each layer may be the same or different, with no particular limitation.

In one embodiment, the electrolyte solution includes one or more of carbonate solvents and ether solvents.

Carbonates are usually small-molecule cyclic or linear carbonates; including but not limited to one or more of ethylene carbonate, propylene carbonate, butylene carbonate, vinylene carbonate, methyl propyl carbonate, dipropyl carbonate, dimethyl carbonate, diethyl carbonate, ethyl methyl carbonate, and fluorinated carbonates; and may also be at least one ester solvent of γ-butyrolactone, dimethyl sulfite, ethyl acetate, methyl acetate, methyl butyrate, ethyl butyrate, methyl propionate, ethyl propionate, propyl acetate, and fluorinated carboxylates.

Ether solvents include but are not limited to one or more of dimethyl ether, diethyl ether, tetrahydrofuran, methyltetrahydrofuran, ethylene oxide, 1,3-dioxolane, fluoroether, DME (ethylene glycol dimethyl ether), DEE (ethylene glycol diethyl ether), DEGDME (diethylene glycol dimethyl ether), TRGDME (triethylene glycol dimethyl ether), TEGDME (tetraethylene glycol dimethyl ether), dipropyl ether, and dibutyl ether.

In other embodiments, the electrolyte solution may further include a mixture of any one or more of amine solvents, sulfone solvents, and nitrile solvents. Amine solvents include at least one of N-methylacetamide, N-methylformamide, dimethylformamide, and diethylformamide. Sulfone solvents include at least one of dimethyl sulfoxide, sulfolane, diphenyl sulfoxide, thionyl chloride, and dipropyl sulfone. Nitrile solvents include at least one of acetonitrile, succinonitrile, adiponitrile, and glutaronitrile. High-voltage resistant electrolyte solutions are preferred. Such electrolyte solutions have reduced acidity at high voltages, can facilitate the transmission of active ions, significantly mitigate side reactions on the electrode surface, and improve battery stability.

In some embodiments, the electrolyte solution further includes an electrolyte salt, and the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluoro(oxalato)phosphate, and lithium tetrafluoro(oxalato)phosphate.

In some embodiments, the electrolyte solution may optionally further include additives. For example, the additives may include negative electrode film-forming additives and positive electrode film-forming additives, and may also include additives capable of improving certain properties of the battery cell, such as additives that improve the overcharge performance of the battery cell, and additives that improve the high-temperature or low-temperature performance of the battery cell.

With the charging and discharging process of the battery cell, some side reactions generate gas. If the gas accumulated inside the battery cell cannot be discharged in a timely manner, the internal pressure of the battery cell will increase. Excessive internal pressure will have a negative impact on the performance and appearance of the battery cell. For example, in severe cases, it will have a destructive impact on the performance and appearance of the battery cell, such as liquid leakage, swelling, increased internal resistance of the battery cell, and shortened discharge duration and cycle life. In addition, some abnormal operations during the use of the battery cell, including overcharging, overdischarging, internal faults, and the like, may lead to uncontrolled chemical reactions inside the battery cell, accompanied by violent gas evolution, and even trigger thermal runaway of the battery cell. Thermal runaway of a battery cell refers to a chain reaction phenomenon triggered by various inducements. A large amount of heat and harmful gases released during thermal runaway may cause the battery to catch fire and explode.

Research has found that the electrolyte solution is one of the key factors affecting gas generation behavior. This is mainly because the electrolyte solution contains some highly active organic substances that are prone to oxidation reactions on the positive electrode side or reduction reactions on the negative electrode side to generate gas.

At present, lithium-ion batteries are the most widely used and well-developed type of batteries. Improving energy density and charging speed is an important goal of lithium-ion battery optimization. To achieve this goal, one of the solutions is to design the electrolyte solution of lithium-ion batteries. Using electrolyte solutions with high conductivity and low viscosity can greatly improve the energy density and charging speed of the battery. However, electrolyte solutions with high conductivity and low viscosity have the characteristics of high activity and are prone to oxidation reactions on the positive electrode side or reduction reactions on the negative electrode side to generate a large amount of gas.

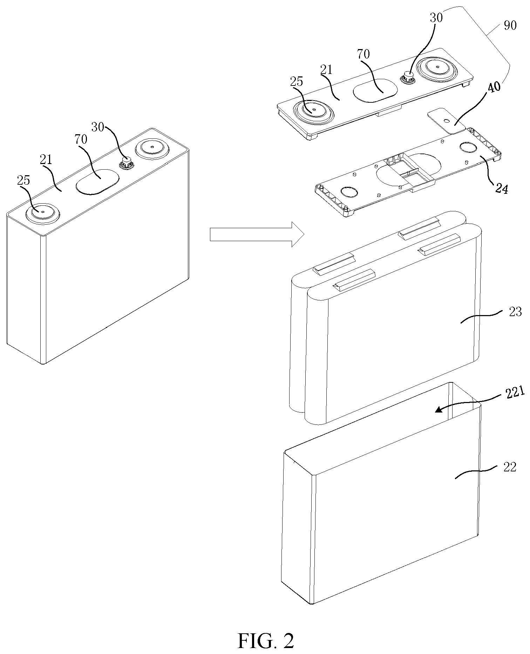

Referring to FIG. 2. FIG. 2 is a schematic exploded structural view of a battery cell according to one or more embodiments. According to some embodiments of the present application, the present application discloses a battery cell 20. The battery cell 20 includes a housing and a venting assembly 90. The housing has a wall portion and an accommodating cavity 221. The venting assembly 90 is disposed on the wall portion. The venting assembly 90 is configured to discharge internal gas of the housing of the battery cell. The arrangement of the venting assembly 90 can discharge the internal gas of the battery cell to the outside of the housing in a timely manner, maintain the internal pressure of the battery cell within a normal level, improve the safety performance of the battery cell, and greatly extend the service life of the battery cell.

In this embodiment, the battery cell 20 further includes an electrolyte solution, where the electrolyte solution is filled in the accommodating cavity 221. A first component includes one of or a mixture of two or more of dimethyl carbonate, 2-methyltetrahydrofuran, diethylene glycol dimethyl ether, diethylene glycol dimethyl ether, succinonitrile, glutaronitrile, methyl formate, ethyl formate, methyl acetate, ethyl acetate, methyl acrylate, dimethyl sulfite, diethyl sulfite, ethyl methyl sulfite, and 3-methyl-2-butanone. The above electrolyte solution components have at least one of two properties, namely high conductivity and low viscosity. When applied to the electrolyte solution system of the battery cell, those electrolyte solution components can realize rapid migration of ions and improve the charging capability and energy density of the entire battery cell.

In the solution of the present application, at least one of substances with high conductivity and low-viscosity substances is introduced into the electrolyte solution system. The energy density and charging capability of the battery cell can be improved. However, electrolyte solution components with high conductivity and low viscosity are often some chain low-molecular-weight organic substances with high activity, which are more prone to oxidation/reduction reactions During charge and discharge, resulting in an increase in the gas generation volume of the battery cell, causing the internal pressure of the battery cell to increase, and bringing a series of adverse effects.

Based on this, in the solution of the present application, the gas generation behavior of high-conductivity and low-viscosity electrolyte solutions is fully studied. Venting assemblies with different venting rates are matched to battery cells using different electrolyte solution components, so as to balance the contradiction between high energy density and charging capability and high gas generation volume. Meanwhile, for some battery cells that do not require high conductivity, there is no need to match a venting assembly with a large venting capacity, so as to reduce the impact of external water vapor intrusion on the battery cell during venting.

In the solution of the present application, venting assemblies with different venting rates are matched to battery cells using different contents of the first component, so as to balance the contradiction between high energy density and charging capability and high gas generation volume. Meanwhile, for some battery cells that do not require high conductivity, there is no need to match a venting assembly with a large venting capacity, so as to reduce the impact of external water vapor intrusion on the battery cell during venting.

In one embodiment, based on a total mass of the electrolyte solution, a content of the first component is 5% to 85%. The content of the first component is calculated based on the total mass of the electrolyte solution to calculate a proportion of the first component in the total electrolyte solution.

Optionally, the content of the first component is 15% to 35%. The content of the first component may be selected as 5%, 10%, 20%, 30%, 40%, 50%, and the like. In this case, the content of the first component is relatively small, and the gas generation volume of the battery cell is relatively small. A venting assembly with a small venting rate may be matched, which can discharge the gas in a timely manner and can also reduce the probability of external water vapor entering the interior of the housing through the venting assembly, which helps to maintain the tightness of the battery cell.

In yet another embodiment, based on the total mass of the electrolyte solution, the content of the first component is higher than or equal to 50%. Optionally, the content of the first component is 65% to 85%. The content of the first component may be selected as 50%, 55%, 60%, 70%, 80%, 90%, 100%, and the like. In this case, the content of the first component is relatively large, and the gas generation volume of the battery cell is large. Therefore, a venting assembly with a large venting rate is matched, which can discharge the gas in a timely manner and quickly balance the internal and external pressure of the housing of the battery cell.

In one embodiment, the battery cell further includes an electrode assembly, where the electrode assembly is accommodated in the accommodating cavity, the electrode assembly includes a negative electrode sheet, the negative electrode sheet includes a negative electrode active material, and the negative electrode active material includes a silicon-based material.

The negative electrode active material is a carrier of conductive ions and electrons during charging of the battery cell, and plays a role in storing and releasing energy. Therefore, it exerts a critical influence on the energy density and charging capability of the battery cell. The specific capacity of the negative electrode material refers to the amount of charge that can be stored per unit mass. A higher specific capacity corresponds to higher energy density of the battery cell. In addition, the ion intercalation performance of the negative electrode material can affect the charging rate of the battery cell. Negative electrode materials that allow faster intercalation of active ions help to improve the charging rate of the battery cell.

Silicon-based materials feature high theoretical specific capacity (the theoretical specific capacity of silicon is as high as 4200 mAh/g) and a low lithium intercalation potential, and have great application prospects in improving the energy density and charging capability of the battery cell.

However, when the silicon-based material is used as the negative electrode, the volume of silicon will swell by more than 300% when fully lithiated. Such a huge volume change will bring a series of problems: cracking or even pulverization of the silicon negative electrode material, detachment of active materials from the electrode sheet, and rupture of the solid electrolyte interphase (SEI) film. These issues lead to rapid capacity fading and significant deterioration of cycling performance of the battery cell. Meanwhile, there will be a certain amount of gas generated. The gas generated in the battery cell stays on the surface of the electrode sheet, which will hinder the intercalation and deintercalation of lithium, leading to the deterioration of the performance of the battery cell. Meanwhile, if the gas generated in the battery cell is not discharged in a timely manner, the internal pressure of the battery cell will increase. Excessive internal pressure will have a negative impact on the performance and appearance of the battery cell, such as liquid leakage, swelling, increased internal resistance of the battery cell, shortened discharge duration and cycle life, ultimately reducing the long-term reliability of the battery cell and shortening the service life of the battery cell. Therefore, it is necessary to balance the relationship between gas generation of the battery cell and the electrolyte solution system.

In the solution of the present application, a venting assembly is matched to a battery cell using a silicon-based negative electrode active material to discharge internal gas of the battery cell in a timely manner.

According to some embodiments of the present application, the electrolyte solution further includes a second component, where the second component includes fluoroethylene carbonate.

Fluoroethylene carbonate (FEC) has excellent electrolyte interface stability and can form a thin film covering the surface of the electrolyte solution, effectively preventing unnecessary reactions between oxidizing components in the electrolyte solution and the negative electrode of the battery cell, thereby improving the cycle life and charge-discharge efficiency of the battery cell. The cycling performance of the silicon-based negative electrode can be improved by adding fluoroethylene carbonate (FEC) to the electrolyte solution. After FEC is added, the SEI film composition will change, and a SEI film rich in lithium fluoride (LiF) will be generated on the surface of the negative electrode, which can significantly improve the cycle stability of the silicon-based negative electrode. Nevertheless, the addition of FEC deteriorates the gas generation behavior and leads to an increase in gas generation volume. In the solution of the present application, during venting assembly matching, a venting assembly with a relatively large venting rate is selected.

In one embodiment, based on a total mass of the negative electrode active material, the silicon content is lower than or equal to 5%. The silicon content lower than or equal to 5%, and may be 1%, 2%, 3%, 4%, or 5%. The electrolyte solution includes fluoroethylene carbonate, and based on the total mass of the electrolyte solution, a content of the fluoroethylene carbonate is lower than or equal to 3%.

In this case, the content of the fluoroethylene carbonate is lower than or equal to 3%, and may be 1%, 2%, or 3%. Adding fluoroethylene carbonate to the electrolyte solution can alleviate the swelling of the silicon-based material and improve the cycle stability of the silicon-based negative electrode. Meanwhile, considering that the silicon content is low, the negative impact caused by the swelling of the silicon-based material is small, and thus a lower content of fluoroethylene carbonate can be matched to reduce the cost.

In the above negative electrode active material and corresponding electrolyte solution design, the content of fluoroethylene carbonate is low, so the gas generated is relatively small, and a venting assembly with a low venting rate is matched accordingly.

In one embodiment, based on the total mass of the negative electrode active material, the silicon content is higher than 5%. The silicon content may be 6%, 10%, 20%, 30%, and the like. The electrolyte solution includes fluoroethylene carbonate, and based on the total mass of the electrolyte solution, the content of the fluoroethylene carbonate is higher than 3%. The content of the fluoroethylene carbonate may be 3%, 5%, 8%, 10%, 12%, 14%, 16%, 18%, 20%, and the like. In this embodiment, the high silicon content can further improve the energy density and charging capability of the battery cell, while exacerbating the adverse effect of silicon swelling. The increased content of fluoroethylene carbonate not only can further suppress the swelling of the silicon-based negative electrode material; but also can lead to high gas generation volume. A venting assembly with a large venting rate can be matched, which can discharge the generated gas in a timely manner, and can take into account the safety performance and service life of the battery cell while improving the charging capability and energy density of the battery cell.

In one embodiment, the electrolyte salt is an important part of the battery electrolyte solution, which can improve the ionic conductivity of the electrolyte solution. Forming a stable low-impedance SEI film helps to improve the cycling performance of the battery. Selecting a suitable electrolyte salt can slow down the impact of the cycling performance degradation caused by the silicon-based negative electrode. The fluoride ions in lithium bis(fluorosulfonyl)imide (LiFSI) have a strong electron-withdrawing property, which weakens the coordination between the cations and anions of the lithium salt, and enhances the mobility of lithium ions. This lithium salt features high conductivity, thermal stability, and electrochemical stability, hardly causes side reactions, and can also suppress the swelling effect.

In one embodiment, based on the total mass of the negative electrode active material, the silicon content is lower than or equal to 5%, the electrolyte solution includes fluoroethylene carbonate, based on the total mass of the electrolyte solution, the content of the fluoroethylene carbonate is lower than or equal to 3%, and the electrolyte salt includes LiFSI lithium salt.

The silicon content is lower than or equal to 5%, and may be 1%, 2%, 3%, 4%, or 5%. In this case, the content of the fluoroethylene carbonate is lower than or equal to 3%, and may be 1%, 2%, or 3%. Adding fluoroethylene carbonate to the electrolyte solution can alleviate silicon swelling and improve the cycle stability of the silicon-based negative electrode. Meanwhile, considering that the silicon content is low, the negative impact caused by silicon swelling is small, and a lower content of fluoroethylene carbonate can be matched to reduce the cost.

In the above negative electrode active material and corresponding electrolyte solution design, the content of fluoroethylene carbonate is low, so the gas generated is relatively small, and a venting assembly with a low venting rate is matched.

Through the above configuration, the gas generated inside the battery cell can be discharged in a timely manner to maintain normal pressure inside the battery cell. Meanwhile, the probability of external impurities (air, moisture, dust, and the like) entering the interior of the battery cell is reduced, and the air tightness of the battery cell is maintained. The safety performance and service life of the battery cell can be taken into account while improving the charging capability and energy density of the battery cell.

According to some embodiments of the present application, based on the total mass of the negative electrode active material, the silicon content is higher than 5%, the second component includes fluoroethylene carbonate, and based on the total mass of the electrolyte solution, the content of the fluoroethylene carbonate is higher than 3%. The content of the fluoroethylene carbonate is large, and a venting assembly with a small venting rate is matched, which can discharge the gas in a timely manner and quickly balance the internal and external pressure of the housing of the battery cell.

The silicon content may be 6%, 10%, 20%, 50%, 80%, and the like. The content of the fluoroethylene carbonate increases accordingly, and the venting rate of the venting assembly also increases accordingly. In this embodiment, the silicon content is large, which can further improve the energy density and charging capability of the battery cell. The large content of fluoroethylene carbonate can further suppress the swelling of the silicon-based negative electrode material. The matched venting assembly with a large venting rate can discharge the generated gas in a timely manner, and can take into account the safety performance and service life of the battery cell while improving the charging capability and energy density of the battery cell.

In the above embodiments, the internal pressure of the battery cell is controlled by matching corresponding venting assemblies for different electrolyte solution components. Based on this, the energy density and charging speed of the battery cell can be improved by designing the negative electrode active material of the lithium-ion battery cell. For example, selecting a graphite-mixed silicon negative electrode active material can significantly improve the energy density of the battery cell. Meanwhile, additives that suppress swelling are added to the electrolyte solution system to improve the cycling performance of the battery cell, and a matching venting assembly is also provided to discharge the gas generation caused by the addition of the swelling-suppressing additives in a timely manner. The electrolyte solution components (solvents, additives) may also be screened and designed; and high-proportion high-conductivity components or new high-conductivity component designs are introduced. The introduction of high-conductivity components can improve energy density and charging rate, and a matched venting assembly is also provided to discharge the gas generation caused by the high-conductivity components in a timely manner.

In some embodiments, the positive electrode active material is the key to restricting the overall performance of the battery. By regulating the positive electrode active material, a battery with greater capacity and higher energy density can be designed. For example, the energy density of the battery cell can be increased by increasing the nickel (Ni) content in the ternary positive electrode material to obtain a higher specific capacity per gram. However, high nickel content will lead to stronger oxidation of the positive electrode active material, resulting in gas generation during the use of the battery cell. If the gas generated in the battery cell is not discharged in a timely manner, the internal pressure of the battery cell will increase, and excessive internal pressure will have a negative impact on the performance and appearance of the battery cell. For example, in severe cases, it will have a destructive impact on the performance and appearance of the battery cell, such as liquid leakage, swelling, increased internal resistance of the battery cell, and shortened discharge duration and cycle life.

In this embodiment, the battery cell 20 further includes an electrode assembly 23, where the electrode assembly 23 is accommodated in the accommodating cavity 221, the electrode assembly 23 includes a positive electrode sheet, the positive electrode sheet includes a positive electrode active material, the positive electrode active material includes a first type of material, the first type of material includes a first ternary material, and a mass content of nickel in the first ternary material is higher than or equal to 50% and lower than 100% (50% < nickel content < 100%).

In a battery cell, the positive electrode active material acts as an ion source, providing conductive ions that migrate between the positive and negative electrodes in reversible charging and discharging processes, and therefore has an important impact on the energy density of the battery cell. The specific capacity of the positive electrode active material is defined as the quantity of electric charge stored per unit mass of material. A higher specific capacity corresponds to higher energy density of the battery cell.

The "ternary" of the ternary positive electrode material refers to a polymer containing three metal elements: nickel (Ni), cobalt (Co), and manganese (Mn), or nickel (Ni), cobalt (Co), and aluminum (Al). Materials containing nickel-cobalt-manganese three transition metal oxides or nickel-cobalt-aluminum three metal oxides may be used as active positive electrode materials and applied to lithium-ion batteries. Each element in the ternary material plays an important role, and at the same time, the characteristics of each element also restrict the battery performance. Taking nickel-cobalt-manganese ternary materials as an example: Ni exhibits high capacity and low safety; Co exhibits high cost and high stability; and Mn exhibits high safety and low cost. In order to improve the energy density of the battery, the current mainstream approach is to increase the nickel content. Nevertheless, the increase in nickel content will lead to stronger oxidation of the positive electrode material, resulting in oxidation of the electrolyte solution and gas generation during the use of the battery cell.

In this embodiment, the mass content of nickel in the first ternary material may be 50%, 60%, 70%, 80%, 90%, 99%, and the like. As mentioned above, increasing the nickel content in the ternary material can increase the energy density of the battery cell. However, as the nickel content in the ternary material increases, the surface of the material becomes more active, thereby increasing the electrochemical and chemical reaction activity of the ternary material in contact with the electrolyte solution, causing the ternary material to be oxidizing, slowly oxidizing the electrolyte solution and releasing gas, and increasing the gas generation volume of the battery cell.

In the solution of the present application, the gas generation behavior of the positive electrode active material is fully studied, and venting assemblies with different venting rates are matched to battery cells using different positive electrode active materials, so as to discharge the internal gas of the battery cell in a timely manner and balance the contradiction between high energy density requirement and high gas generation volume. Meanwhile, for some battery cells that do not require high conductivity, there is no need to match a venting assembly with a large venting capacity, so as to reduce the impact of external water vapor intrusion on the battery during venting.

In the solution of the present application, venting assemblies with different venting rates are matched to battery cells using different positive electrode active materials, so as to balance the contradiction between high energy density requirement and high gas generation volume.

In one embodiment, the positive electrode active material includes a first ternary material, where the mass content of nickel in the first ternary material is higher than or equal to 50% and lower than 80% (50% ≤ nickel content < 80%), and may be 50%, 60%, 70%, 75%, 79%, and the like.

In this case, the content of nickel in the first ternary material is relatively small, the oxidation of the positive electrode material is relatively low, and the gas generation volume of the battery cell is small. A venting assembly with a small venting rate can be matched, which can meet the basic ventilation requirements and at the same time reduce the intrusion of external water vapor.

In one embodiment, the mass content of nickel in the first ternary material is higher than or equal to 50% and lower than or equal to 60%. Through such a configuration, the safety performance and service life of the battery cell can be taken into account while increasing the capacity of the battery cell.

In one embodiment, a median particle size Dv50 of the first ternary material is 2 µm to 4 µm.

Dv50 refers to a particle diameter when the cumulative volume percentage is 50%. When the particle size is large, a contact area with the electrolyte solution and the like becomes larger, and side reactions are more likely to occur to generate gas. Through the above configuration, the internal gas of the battery cell can be discharged in a timely manner, and the internal pressure of the battery cell can be maintained within a normal range.

In one embodiment, a mass content of cobalt in the first ternary material is 12% to 18%. For example, it may be 12%, 13%, 14%, 15%, 16%, 17%, or 18%. By regulating the mass content of cobalt, the stability of the positive electrode active material can be enhanced.

In one embodiment, the mass content of nickel in the first ternary material is higher than or equal to 50% and lower than or equal to 60%, the mass content of cobalt is 12% to 18%, and the median particle size Dv50 is 2 µm to 4 µm. This material is generally used as a high-power positive electrode active material, that is, this positive electrode active material has a high power, which can effectively improve the power performance of the battery. However, there is also a problem of gas generation. Therefore, when the content of nickel in the first ternary material is higher than 50% and lower than 80%, a relatively large venting rate within the corresponding venting rate range is matched to meet the venting requirements and maintain the internal pressure of the battery within a normal range.

In one embodiment, the positive electrode active material includes a first ternary material, where the mass content of nickel in the first ternary material is higher than or equal to 80%, and may be 80%, 85%, 90%, 95%, 99%, and the like.

In this embodiment, the content of nickel in the first ternary material is relatively large, the oxidation of the positive electrode material is relatively high, and the gas generation volume of the battery cell is large. Therefore, a venting assembly with a large venting rate is matched to discharge the gas in a timely manner.

In one embodiment, based on a total mass of the positive electrode active material, the content of the first ternary material is higher than or equal to 50%, and may be 50%, 60%, 70%, 80%, 90%, 100%, and the like.

The positive electrode active material includes the first ternary material, and when the content of the first ternary material is higher than or equal to 50% based on the total mass of the positive electrode active material, in addition to the first ternary material, the positive electrode active material may include at least one of a second ternary material and a lithium manganese iron phosphate material. A content of nickel in the second ternary material is different from the content of nickel in the first ternary material. Controlling the content of the first ternary material helps to reduce the cost of the positive electrode material on the basis of increasing the energy density. In this case, the above venting assembly may be matched.

In one embodiment, the first ternary material includes one or more of single crystal particles and polycrystalline particles.

Ternary materials may be classified into single-crystal and polycrystalline types according to different crystal morphologies. A single crystal is a crystal grown from a single crystal nucleus, and basically has an integral lattice structure inside, while a polycrystalline is formed by combining numerous single crystal particles with different orientations. In lithium-ion battery ternary positive electrode materials, polycrystalline and single-crystal materials are mixed. Polycrystalline materials have high specific capacity per gram, good power performance, and low cost. However, the skeleton structure of polycrystalline ternary materials has poor firmness. During cycling of the battery, especially under high-voltage charging and discharging, continuous swelling and contraction of the particles easily induce intergranular micro-cracks in the material, which leads to poor stability of the crystal structure. Meanwhile, the electrolyte solution entering the micro-cracks intensifies the side reactions of the electrolyte solution on the surface of the positive electrode material and generates gas. By matching the venting assembly, the venting requirements can be met and the internal pressure of the battery can be maintained within a normal range.

In one embodiment, the positive electrode active material includes a lithium manganese iron phosphate material.

In addition to ternary positive electrode materials, lithium iron phosphate positive electrode materials are also mainstream application materials for lithium-ion batteries, and lithium iron phosphate (LFP) positive electrode materials have the advantages of safety performance and low cost. However, for LFP batteries, their energy density has nearly reached its theoretical limit, leaving little room for performance improvement. The lithium manganese iron phosphate (LMFP) has a crystal structure similar to LFP, and also has the characteristics of stable chemical properties and excellent safety performance. Meanwhile, the manganese element doped in LMFP can increase the charging voltage of the material, increasing the charging voltage from 3.4 V for LFP to 4.1 V, which increases the theoretical energy density of LMFP batteries by 15% to 20%. Moreover, the LMFP has better safety performance than ternary positive electrode materials, relies less on rare metals, and can be produced on the same production line as LFP, delivering prominent cost advantages.

In one embodiment, increasing the energy density of the battery may also be achieved by increasing the thickness of the positive active layer. during electrode fabrication, increasing the coating thickness of the active coating can increase the loading of the electrode and increase the energy density of the battery. However, thicker electrodes will make the ion transmission path longer and increase the internal resistance of the battery at the same time. Therefore, a high-kinetics electrolyte solution needs to be matched. High-kinetics electrolyte solutions usually have higher lithium ion transmission speeds, which can compensate for the increase in ion diffusion paths and internal battery resistance caused by increasing the thickness of the positive electrode sheet. High-kinetics electrolyte solutions may cause an increase in the amount of gas generated from electrolyte solution decomposition.

In one embodiment, a thickness of the positive electrode active material is greater than or equal to 130 µm. The thickness of the positive electrode active material may be 130 µm, 150 µm, 170 µm, 200 µm, 220 µm, and the like. In this case, the thickness of the positive electrode active material is large, which can increase the loading of the electrode and increase the energy density of the battery. Matching a venting assembly with an appropriate venting rate can discharge the gas generated by the battery in a timely manner, so as to balance energy density and safety performance.

In addition, when the thickness of the positive electrode active layer is greater than or equal to 130 µm, the positive electrode active layer material includes at least one of a first type of material and a second type of material. The first type of material includes a first ternary material; and the second type of positive electrode material includes a lithium manganese iron phosphate material, and may further include a second ternary material.

According to some embodiments of the present application, the venting assembly includes a gas permeable membrane assembly, the gas permeable membrane assembly includes a gas permeable membrane, the gas permeable membrane is configured to allow internal gas of the battery cell to be discharged through the gas permeable membrane, and a gas permeation rate of the gas permeable membrane is 0.025 mL/day to 8 mL/day.

According to some embodiments of the present application, the gas permeable membrane assembly includes a gas permeable membrane. The gas permeable membrane is made of a gas permeable material, has good gas permeability, and can allow gas molecules to pass through. By selecting a gas permeable membrane assembly as the venting assembly, the battery cell can discharge internal gas through the gas permeable membrane in a sealed state, discharge the internal gas of the housing of the battery cell to the outside of the housing in a timely manner, prevent the internal pressure of the housing of the battery cell from being too high, prevent the pressure relief mechanism from opening the valve in advance, and can greatly extend the service life of the battery cell.

Further, the gas permeable membrane also has liquid-retaining performance to block liquid passage. Therefore, it can block the overflow of the electrolyte solution while discharging gas. In addition, the gas permeable membrane can also block external water vapor, dust impurities, and the like from entering the interior of the battery cell, protect the internal environment of the battery cell, and effectively improve the reliability of the battery cell. The gas permeable membrane also has good weather resistance, chemical corrosion resistance, and structural stability. For automotive power battery, it also needs to have oleophobicity. Therefore, the material of the gas permeable membrane may be selected from polymer materials, such as polytetrafluoroethylene and polypropylene. In addition, since the gas generated inside the battery cell will cause the internal pressure to rise rapidly, the gas permeable membrane needs to have a certain mechanical strength and elasticity.

The gas permeation rate of the gas permeable membrane depends on the characteristics of the gas permeable membrane. A polymer film with a certain porosity may be selected as the gas permeable membrane. Materials with different porosities may be used to fabricate gas permeable membranes with different gas permeation rates. For example, the gas permeation rate of the gas permeable membrane may be 0.025 mL/day, 0.05 mL/day, 0.1 mL/day, 0.3 mL/day, 0.5 mL/day, 1.0 mL/day, 1.5 mL/day, 2.5 mL/day, 3.0 mL/day, 3.5 mL/day, 4.0 mL/day, 5.0 mL/day, 6.5 mL/day, 7.0 mL/day, 7.5 mL/day, or 8.0 mL/day. The gas permeation rate of the gas permeable membrane is tested at 23°C, 0% RH (humidity is 0%), and 0.1 MPa pressure. For the test method, refer to the standard GB/T1038-2000.

According to some embodiments of the present application, the gas permeable membrane includes a first gas permeable membrane, where a gas permeation rate of the first gas permeable membrane is 0.025 mL/day to 4 mL/day, which is applicable to scenarios with low gas generation volume. In other words, when the venting rate requirement of the venting assembly is low, a gas permeable membrane assembly containing the first gas permeable membrane may be selected.

According to some embodiments of the present application, the gas permeable membrane includes a second gas permeable membrane, where a gas permeation rate of the second gas permeable membrane is 5 mL/day to 8 mL/day, which is applicable to scenarios with high gas generation volume. In other words, when the venting rate requirement of the venting assembly is high, a gas permeable membrane assembly containing the second gas permeable membrane may be selected.

According to some embodiments of the present application, the venting assembly 90 includes a one-way valve 30, where the one-way valve 30 is configured to actuate and release the internal gas of the battery cell 20 when the internal pressure of the battery cell 20 reaches a threshold. In other words, the one-way valve 30 is configured to discharge the internal gas of the housing of the battery cell, that is, the one-way valve 30 can be opened in one direction for venting, so that the internal gas of the housing of the battery cell can be discharged to the outside of the housing through the one-way valve 30.

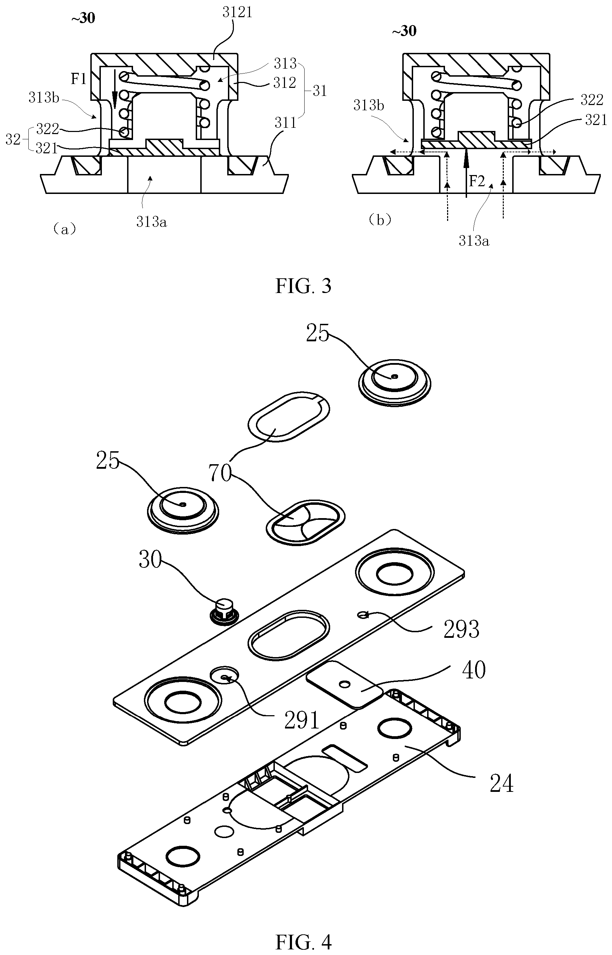

Referring to FIG. 3. FIG. 3 is a schematic cross-sectional structural view of a one-way valve according to one or more embodiments. According to some embodiments of the present application, the one-way valve 30 includes a valve body 31 and a valve core 32. The valve body 31 has a valve cavity 313 inside. The valve body 31 is provided with a gas inlet 313a and a gas outlet 313b. The gas inlet 313a is configured to communicate the valve cavity 313 with the interior of the housing, and the gas outlet 313b is configured to communicate the valve cavity 313 with the exterior of the housing. The valve core 32 is disposed in the valve cavity 313. The valve core 32 is configured to block a gas inlet channel of the valve cavity 313. The valve core 32 is configured to open the gas inlet channel under the action of internal gas of the housing and release the internal gas of the battery cell.

As shown in FIG. 3, (a) in FIG. 3 is a schematic diagram of the one-way valve in a non-open state; and (b) in FIG. 3 is a schematic diagram of the one-way valve in an open state. The valve core 32 includes an elastic member 322 and a blocking member 321. The blocking member 321 includes a pressing portion 3212 and a sealing portion 3211. The elastic member 322 exerts an elastic force F1 to the blocking member 321, so that the blocking member 321 is pressed to block the gas inlet 313a. When the force F2 of the internal gas of the housing acting on the blocking member 321 is greater than the elastic force F1 of the elastic member, the internal gas of the housing can overcome the elastic force of the elastic member and push the blocking member 321 to open the gas inlet 313a, so that the internal gas of the housing can enter the valve cavity 313 and then be discharged to the outside of the housing through the gas outlet 313b. Conversely, after the internal gas of the housing is discharged and the force F2 of the internal gas of the housing acting on the blocking member 321 is less than the elastic force F1 of the elastic member, the elastic member 322 can drive the blocking member 321 to reset to block the gas inlet 313a.

Specifically, when the internal pressure of the housing increases to a certain value P1, the force F2 applied by the pressure to the lower surface of the blocking member 321 is greater than the spring pressing force F1, the sealing interface fails, and the internal gas of the housing is discharged to the outside of the housing through the internal channel of the valve body 31. As the internal gas of the housing is discharged, the internal pressure decreases. When the pressure reaches a certain value P2, the valve body 31 closes to achieve sealing. The valve body 31 can achieve multiple repeated valve opening, venting, and closing, so that the internal pressure of the housing is maintained between P1 and P2, thereby preventing the pressure relief mechanism from opening the valve in advance due to excessive internal pressure of the housing. That is to say, the one-way valve requires a certain pressure threshold to open the valve.

According to some embodiments of the present application, an opening pressure of the valve core is greater than or equal to 0.2 MPa; further, greater than or equal to 0.4 MPa; and still further, greater than or equal to 0.8 MPa. For example, the opening pressure may be 0.20 MPa, 0.25 MPa, 0.30 MPa, 0.35 MPa, 0.40 MPa, 0.45 MPa, 0.50 MPa, 0.55 MPa, 0.60 MPa, 0.65 MPa, 0.70 MPa, 0.75 MPa, 0.80 MPa, and the like.

The test method and principle of the opening pressure of the one-way valve can be tested based on the helium leak criterion. The helium leak criterion is defined as: if a leak rate is less than 10^-6 Pa·m^3/s, a system is deemed hermetically sealed, and if a leak rate is greater than 10^-6 Pa·m^3/s, it indicates that gas leakage occurs in the system.

During detection, the one-way valve is used to seal a test chamber, helium is filled into the test chamber, and a helium detector is used to monitor the amount of helium in the environment where the test chamber is located. If helium is detected and the leak rate is greater than 10^-6 Pa·m^3/s, it indicates loss of chamber tightness and helium escape. The helium leak rate is continuously monitored. When the leak rate is greater than 10^-5 Pa·m^3/s, it is determined that the one-way valve is opened to release gas, and the pressure of the test chamber at this instant is recorded as the opening pressure of the one-way valve.

According to some embodiments of the present application, 0.2 MPa is suitable for battery cells with low pressure resistance and the electrode assembly with high gas generation rate and high gas generation volume. In this case, the internal gas of the housing can push the valve core to open the gas inlet channel in low gas generation volume, so that the internal gas of the housing can enter the valve cavity and then be discharged to the outside of the housing through the gas outlet, which helps to discharge the gas generated in the battery cell in a timely manner and maintain normal internal pressure of the battery cell. 0.4 MPa is suitable for battery cells with medium pressure resistance and the electrode assembly with medium gas generation rate and medium gas generation volume. In this case, the internal gas of the housing needs to reach 0.4 MPa to push the valve core to open the gas inlet channel, so that the internal gas of the housing can enter the valve cavity and then be discharged to the outside of the housing through the gas outlet. While being able to discharge the gas produced by the battery cell in a timely manner and maintain normal internal pressure of the battery cell, this setting reduces the repeated opening of the valve core caused by repeated changes in the internal pressure of the battery cell, which helps to improve the sealing performance and use stability of the battery cell. 0.8 MPa is suitable for battery cells with strong pressure resistance and the electrode assembly with low gas generation rate and low gas generation volume. In this case, the internal gas of the housing needs to reach 0.8 MPa to push the valve core to open the gas inlet channel, so that the internal gas of the housing can enter the valve cavity and then be discharged to the outside of the housing through the gas outlet. While being able to discharge the gas produced by the battery cell in a timely manner and maintain normal internal pressure of the battery cell, this setting further reduces the repeated opening of the valve core caused by repeated changes in the internal pressure of the battery cell, which helps to improve the sealing performance and use stability of the battery cell.

Through the above configuration, the gas generated inside the battery cell can be discharged in a timely manner to maintain normal internal pressure of the battery cell, and the situation where the one-way valve is activated to relieve pressure in advance due to repeated changes in internal pressure during the use of the battery cell can be suppressed, which helps to improve the use stability of the battery cell, and ultimately can improve the service life and use reliability of the battery cell.

According to some embodiments of the present application, the structure of the venting assembly may be selected according to the required venting rate of the venting assembly; the venting assembly may include a gas permeable membrane assembly, that is, a gas permeable membrane assembly is selected as the venting assembly; and the venting assembly may include a one-way valve, that is, a one-way valve is selected as the venting assembly. In other embodiments, the venting assembly may further include both a one-way valve and a gas permeable membrane assembly.

According to some embodiments of the present application, a gas permeable membrane assembly or a one-way valve is selected for the venting assembly. For example, a gas permeable membrane assembly containing a first gas permeable membrane may be selected alone, or a gas permeable membrane assembly containing a second gas permeable membrane may be selected alone, or a one-way valve with an opening pressure greater than 0.4 MPa may be selected alone; or a gas permeable membrane assembly containing a second gas permeable membrane, or a one-way valve with an opening pressure greater than 0.2 MPa may be selected alone.

According to some embodiments of the present application, the venting assembly 90 includes a gas permeable membrane assembly 40 and a one-way valve 30, the wall portion has a first vent hole 291, the first vent hole 291 communicates the interior of the housing with the exterior of the housing, and the battery cell 20 is configured such that gas discharged through the first vent hole 291 flows through the one-way valve 30 and the gas permeable membrane assembly 40.

As shown in FIG. 2, the first vent hole 291 communicates the interior of the housing with the exterior of the housing, that is, the first vent hole 291 is a through hole, and the internal gas of the housing of the battery cell 20 may be discharged through the first vent hole 291 to regulate the pressure inside the housing of the battery cell 20. The battery cell 20 is configured such that the gas discharged through the first vent hole 291 flows through the one-way valve 30 and the gas permeable membrane assembly 40 means that when the gas is discharged through the first vent hole 291, it also flows through the one-way valve 30 and the gas permeable membrane assembly 40 that belong to the same venting assembly 90; or in other words, gas flowing along the discharge path needs to pass through both the one-way valve 30 and the gas permeable membrane assembly 40. Alternatively, in other words, the one-way valve 30 and the gas permeable membrane assembly 40 in the same venting assembly 90 are connected in series. When the gas flows through the venting assembly 90, it will flow through the one-way valve 30 and the gas permeable membrane assembly 40 in the venting assembly 90 in sequence. The gas may flow through the gas permeable membrane assembly 40 first and then through the one-way valve 30; and may also flow through the one-way valve 30 first and then through the gas permeable membrane assembly 40. The flow sequence may be set as needed, but both structures need to be flowed through, rather than part of the gas flowing only through the one-way valve 30 to be discharged and another part of the gas flowing only through the gas permeable membrane assembly 40 to be discharged. There may be one first vent hole 291 provided on the end cap 21, or there may be a plurality of first vent holes 291 provided on the end cap 21. When there are a plurality of first vent holes 291, each first vent hole 291 is equipped with a set of venting assembly 90, and when gas is discharged through the first vent hole 291, it flows through the one-way valve 30 and the gas permeable membrane assembly 40 in the venting assembly 90 provided at the first vent hole 291.

In this embodiment, by arranging the gas permeable membrane assembly 40 and the one-way valve 30 in series, the presence of the one-way valve 30 can control the battery cell so that it is not always in a venting state, but the one-way valve 30 is activated to vent only when a certain threshold is accumulated, which can protect the sealing performance of the battery cell 20 and reduce the risk of external water vapor entering the interior of the battery cell 20; in addition, the presence of the gas permeable membrane 41 may, on the one hand, block the overflow of the electrolyte solution, and on the other hand, when the one-way valve 30 is opened, the gas permeable membrane 41 can achieve the sealing of the battery cell, so that the battery cell 20 discharges internal gas through the gas permeable membrane 41 and the one-way valve 30 in a sealed state, alleviating the drawback that the battery cell 20 system is in an open state when the one-way valve 30 vents and is easily invaded by external water vapor.

According to some embodiments of the present application, when the venting assembly 90 includes a gas permeable membrane assembly 40 and a one-way valve 30, where the gas permeable membrane assembly 40 and the one-way valve 30 are connected in series, gas permeable membranes 41 with different gas permeation rates and one-way valves 30 with different opening pressures may be matched.

According to some embodiments of the present application, the opening pressure of the one-way valve 30 is greater than or equal to 0.4 MPa, the gas permeable membrane assembly 40 includes a second gas permeable membrane, and the gas permeation rate of the second gas permeable membrane is 5 mL/day to 8 mL/day.

Referring to FIG. 4. FIG. 4 is a schematic exploded structural view of a battery cell according to one or more embodiments. According to some embodiments of the present application, the venting assembly 90 includes a gas permeable membrane assembly 40 and a one-way valve 30. The wall portion has a first vent hole 291 and a second vent hole 293 that are spaced apart from each other. The first vent hole 291 and the second vent hole 293 each communicate the interior of the housing with the exterior of the housing. The battery cell 20 is configured such that gas discharged through the first vent hole 291 flows through the one-way valve 30, and gas discharged through the second vent hole 293 flows through the gas permeable membrane assembly 40.

The first vent hole 291 communicates the interior of the housing with the exterior of the housing, and the second vent hole 293 also communicates the interior of the housing with the exterior of the housing, that is, the two are two independent holes that may vent simultaneously to regulate the pressure inside the housing of the battery cell 20. There may be one first vent hole 291 and one second vent hole 293 provided on the end cap 21 respectively, or there may be a plurality of first vent holes 291 and a plurality of second vent holes 293 provided on the end cap 21 respectively. The battery cell 20 is configured such that gas discharged through the first vent hole 291 flows through the one-way valve 30 and gas discharged through the second vent hole 293 flows through the gas permeable membrane assembly 40 means that the gas may be discharged from both the battery cell 20 through the first vent hole 291 and the second vent hole 293. When flowing through the first vent hole 291 for discharge, the gas flows through the one-way valve 30, and when flowing through the second vent hole 293 for discharge, the gas flows through the gas permeable membrane assembly 40; or in other words, the one-way valve 30 and the gas permeable membrane assembly 40 are connected in parallel. When the gas flows through the venting assembly 90, it may flow through both the one-way valve 30 and the gas permeable membrane assembly 40 in the venting assembly 90, that is, part of the gas flows only through the one-way valve 30 to be discharged, and another part of the gas flows only through the gas permeable membrane assembly 40 to be discharged. When there are a plurality of first vent holes 291, each first vent hole 291 is equipped with one one-way valve 30; and when there are a plurality of second vent holes 293, each second vent hole 293 is equipped with one gas permeable membrane assembly 40.

In this embodiment, by arranging the gas permeable membrane assembly 40 and the one-way valve 30 in parallel, when the internal pressure of the battery cell 20 is low, venting is mainly performed through the gas permeable membrane assembly 40. When the internal pressure of the battery cell 20 is high, the one-way valve 30 opens to vent, and the gas permeable membrane assembly 40 is also venting at the same time. This alleviates the problem of frequent opening of the one-way valve 30 caused by unstable internal pressure of the battery cell 20, reduces the risk of external water vapor intrusion, and improves the sealing performance of the battery cell 20 system; in addition, when the pressure is low, the gas may be discharged in a timely manner through the gas permeable membrane assembly 40. The above arrangement enables the venting assembly 90 to adapt to different pressure environments and improves the flexibility of the venting assembly 90.

According to some embodiments of the present application, when the venting assembly 90 includes a gas permeable membrane assembly 40 and a one-way valve 30, and the gas permeable membrane assembly 40 and the one-way valve 30 are connected in parallel, gas permeable membranes 41 with different gas permeation rates and one-way valves 30 with different opening pressures may be matched.

According to some embodiments of the present application, the opening pressure of the one-way valve 30 in the parallel venting assembly 90 is greater than or equal to 0.4 MPa, the gas permeable membrane assembly 40 includes a first gas permeable membrane, and the gas permeation rate of the first gas permeable membrane is 0.025 mL/day to 4 mL/day.

According to some embodiments of the present application, the venting assembly selects a gas permeable membrane assembly and a one-way valve arranged in series, or a gas permeable membrane assembly and a one-way valve arranged in parallel. In other embodiments, the one-way valve 30 and the gas permeable membrane assembly 40 in the venting assembly may also be mixed in series and parallel, that is, the venting assembly may include both a one-way valve 30 and a gas permeable membrane assembly 40 connected in series and a one-way valve 30 and a gas permeable membrane assembly 40 connected in parallel.

In one embodiment, the venting assembly 90 is disposed on the wall portion of the housing of the battery cell 20. The housing includes an end cap 21 and a shell 22. The wall portion may be the wall of the end cap 21 or the wall of the shell 22. That is, the venting assembly 90 may be disposed on the end cap 21 or on the shell 22. In other words, the wall portion for installing the venting assembly 90 may be the end cap 21 of the housing or a wall of the shell 22 of the housing. Exemplarily, the wall portion is the end cap 21. Certainly, the structure of the battery cell is not limited thereto. In other embodiments, the wall portion may also be the bottom wall opposite to the end cap of the shell and the wall portion may also be the side wall adjacent to and connected to the end cap of the shell. In one embodiment, the venting assembly is preferably arranged on the wall located at the top when the battery cell is placed with its top facing upward. The following description of the solution of the present application will take the wall portion as the wall of the end cap 21 as an example, but this should not limit the present application.

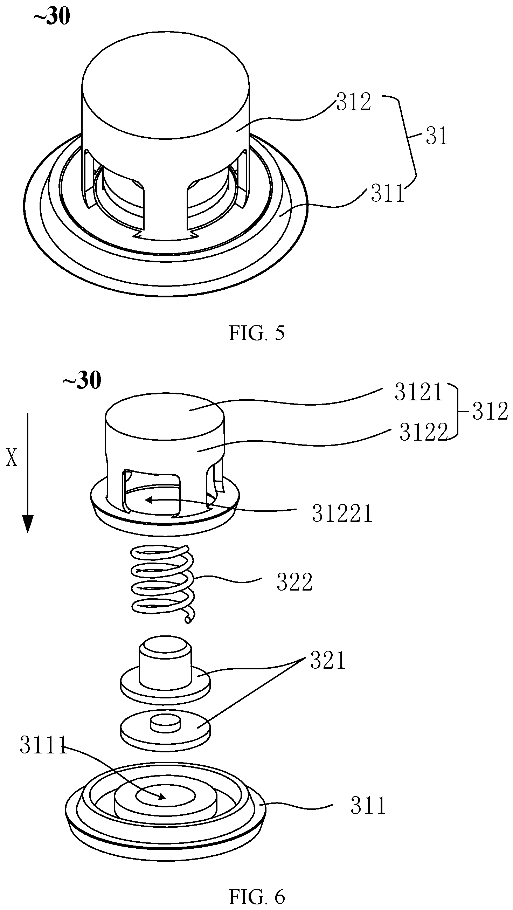

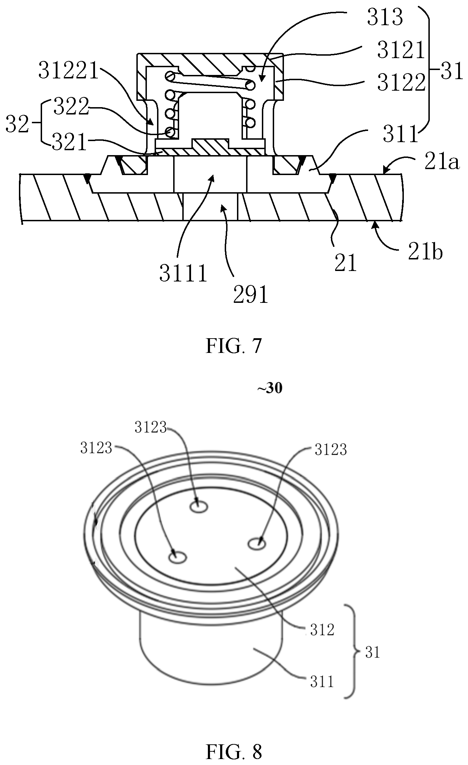

Referring to FIG. 5, FIG. 6, and FIG. 7 in combination, FIG. 5 is a schematic front view of a one-way valve according to one or more embodiments, FIG. 6 is a schematic exploded structural view of a one-way valve according to one or more embodiments, and FIG. 7 is a schematic partial cross-sectional structural view of a battery cell according to one or more embodiments. According to some embodiments of the present application, the end cap 21 includes an outer surface 21a and an inner surface 21b that are arranged opposite to each other. The outer surface 21a is arranged toward the exterior of the housing, and the inner surface 21b is arranged toward the interior of the housing. The one-way valve 30 is disposed on the end cap 21. The valve body 31 of the one-way valve 30 faces the exterior of the housing and at least a portion of the valve body 31 protrudes from the outer surface 21a of the end cap 21.

In this embodiment, the one-way valve 30 includes a valve body 31 and a valve core 32. The valve body 31 has a valve cavity 313 inside, and the valve core 32 is disposed in the valve cavity 313. The valve body 31 includes a valve seat 311 and a valve cover 312. The valve cover 312 includes a cover top wall 3121 and a cover side wall 3122 connected to the cover top wall 3121. The cover top wall 3121, the cover side wall 3122, and the valve seat 311 enclose the valve cavity 313. The valve seat 311 is provided with a gas inlet of the valve cavity 313 to communicate the valve cavity 313 with the interior of the housing. The valve cover 312 is provided with a gas outlet of the valve cavity 313 to communicate the valve cavity 313 with the exterior of the housing. The valve core 32 is configured to block the gas inlet channel of the valve cavity 313. The valve core 32 is configured to open the gas inlet channel under the action of internal gas of the housing and release the internal gas of the battery cell.

Still referring to FIG. 5 and FIG. 6, according to some embodiments of the present application, the valve seat 311 has a first through hole 3111 that penetrates through the valve seat 311. The gas inlet is the first through hole 3111, that is, the first through hole 3111 is used as the gas inlet of the valve cavity 313. The cover side wall 3122 has a second through hole 31221 that penetrates through the cover side wall 3122. The gas outlet is the second through hole 31221, that is, the second through hole 31221 is used as the gas outlet of the valve cavity 313. Through such a configuration, the outward transmission of internal gas of the battery cell may be facilitated.

According to some embodiments of the present application, along a direction away from the cover top wall 3121, the second through hole 31221 extends to an end of the cover side wall 3122. As shown in FIG. 6, the direction away from the cover top wall 3121 is a direction from the cover top wall 3121 to the valve seat 311 (direction X in the figure). The second through hole 31221 is formed by removing part of the structure of the cover side wall 3122. Along direction X, the cover side wall 3122 is hollowed out directly down to the bottom end of the cover side wall 3122. In a further embodiment, along direction X, a lower opening surface of the second through hole 31221 may be flush with a sealing surface of the blocking member 321. Through such a configuration, when the one-way valve 30 is opened to vent, that is, when the blocking member 321 opens the sealing interface, the electrolyte liquid carried out with the gas may be discharged outward in a timely manner, so that the electrolyte solution is not easy to accumulate on the outer edge of the blocking member 321, thereby effectively ensuring the sealing and repeated opening function of the one-way valve 30.

According to some embodiments of the present application, there are a plurality of second through holes 31221, and the plurality of second through holes 31221 are spaced apart from each other in a circumferential direction of the cover side wall 3122. Such a configuration, when the one-way valve 30 is opened to vent, enables the gas to be discharged more quickly, shortens the venting duration, that is, shortens the time the battery cell is in an open state, thereby lowering the intrusion of external water vapor into the battery cell system during valve opening.

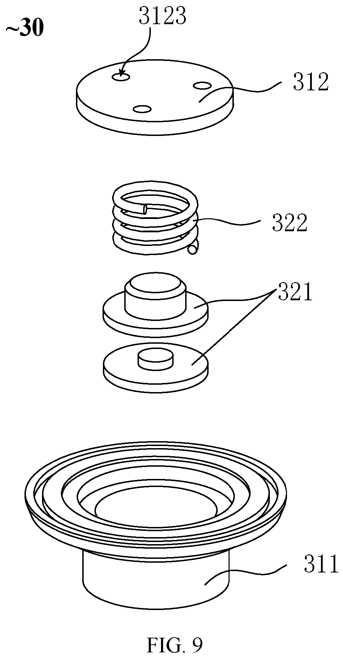

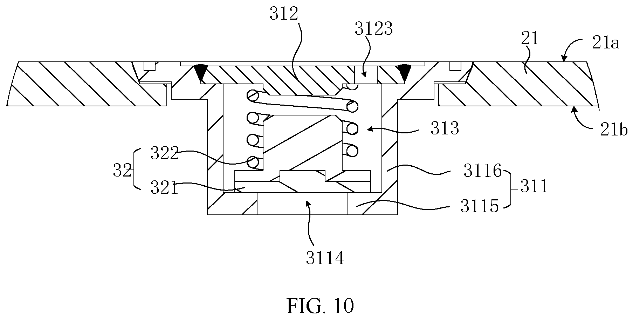

Referring to FIG. 8, FIG. 9, and FIG. 10 in combination, FIG. 8 is a schematic front view of a one-way valve according to one or more embodiments, FIG. 9 is a schematic exploded structural view of a one-way valve according to one or more embodiments, and FIG. 10 is a schematic partial cross-sectional structural view of a battery cell according to one or more embodiments. According to some embodiments of the present application, the end cap 21 includes an outer surface 21a and an inner surface 21b that are arranged opposite to each other. The outer surface 21a is arranged toward the exterior of the housing, and the inner surface 21b is arranged toward the interior of the housing. The one-way valve 30 is disposed on the end cap 21. The valve body 31 of the one-way valve 30 faces the interior of the housing and at least a portion of the valve body 31 protrudes from the inner surface 21b of the end cap 21. That is, the valve body 31 extends into the housing along a thickness direction of the end cap 21.

In this embodiment, the one-way valve 30 includes a valve body 31 and a valve core 32. The valve body 31 has a valve cavity 313 inside, and the valve core 32 is disposed in the valve cavity 313. The valve body 31 includes a valve seat 311 and a valve cover 312. The valve seat 311 includes a seat bottom wall 3115 and a seat side wall 3116 connected to the seat bottom wall 3115. The valve cover 312 is disposed at an end of the valve seat 311 away from the seat bottom wall 3115. The valve cover 312, the seat side wall 3116, and the seat bottom wall 3115 enclose the valve cavity 313. The valve seat 311 is provided with a gas inlet of the valve cavity 313 to communicate the valve cavity 313 with the interior of the housing. The valve core 32 is configured to block the gas inlet channel of the valve cavity 313. The valve core 32 is configured to open the gas inlet channel under the action of internal gas of the housing and release the internal gas of the battery cell.

Still referring to FIG. 8, FIG. 9, and FIG. 10, according to some embodiments of the present application, the valve seat 311 has a fourth through hole 3114 that penetrates through the seat bottom wall 3115. The gas inlet is the fourth through hole 3114, that is, the fourth through hole 3114 is used as the gas inlet of the valve cavity 313. Certainly, in other embodiments, the gas inlet may alternatively be provided on an outer peripheral surface of the part of the valve body 311 that extends into the housing. When the gas inlet is provided on the outer peripheral surface of the part of the valve body 311 that extends into the housing, an arrangement direction of the valve core 32 is changed correspondingly, and the blocking member 321 is movably disposed in the valve cavity 313 along a radial direction of the valve seat 311, so that the valve core blocks the gas inlet.

Still referring to FIG. 8, FIG. 9, and FIG. 10, according to some embodiments of the present application, the gas outlet may be directly opened on the valve cover, that is, the gas outlet is a channel provided on the valve cover. Specifically, the valve cover 312 has a fifth through hole 3123 that penetrates through the valve cover 312. The gas outlet is the fifth through hole 3123, that is, the fifth through hole 3123 serves as the gas outlet of the valve cavity 313. Through such a configuration, the outward transmission of internal gas of the battery cell may be facilitated.

The fifth through hole 3123 provided on the valve cover 312 may be one or multiple. Exemplarily, in FIG. 8 and 9, three fifth through holes 3123 are provided on the valve cover 312. Certainly, in other embodiments, the fifth through holes 3123 provided on the valve cover 312 may also be two, four, five, six, or the like. As an example, there are a plurality of fifth through holes 3123 provided on the valve cover 312, and the plurality of fifth through holes 3123 are arranged at equal intervals. As an example, the plurality of fifth through holes 3123 are arranged at equal intervals around the center of the valve cover 312, which may make the gas flow out more smoothly.

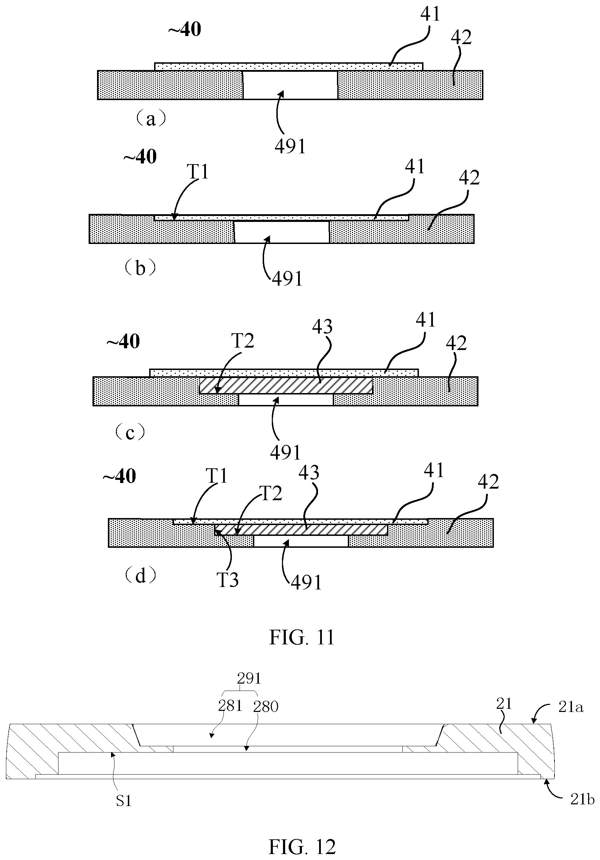

Referring to FIG. 11, FIG. 11 is a schematic cross-sectional structural view of a gas permeable membrane assembly according to one or more embodiments. According to some embodiments of the present application,

The gas permeable membrane assembly 40 includes a gas permeable membrane 41 and a connecting member 42. The connecting member 42 is configured to carry the gas permeable membrane 41. The connecting member 42 is provided with a first gas permeable hole 491. The gas permeable membrane 41 is disposed on the connecting member 42. The gas permeable membrane 41 covers the first gas permeable hole 491. The gas permeable membrane is configured to allow internal gas of the battery cell to pass through the gas permeable membrane and be discharged.

The connecting member 42 may play a supporting role for the gas permeable membrane 41 and reduce the risk of excessive deformation of the gas permeable membrane 41. Meanwhile, the connecting member 42 may also serve as a medium for connecting other components of the gas permeable membrane assembly 40. The gas permeable membrane 41 is connected to other components through the connecting member 42 to improve the stability of the connection. The connecting member 42 is provided with at least one first gas permeable hole 491 as a release channel for internal gas of the battery cell so that the gas may pass through the connecting member 42. The shape of the first gas permeable hole 491 includes geometric shapes such as circles, squares, and ellipses. The connecting member 42 may also be provided with a plurality of first gas permeable holes 491. The aperture, shape, and arrangement of the first gas permeable holes 491 are not specifically limited herein. Optionally, the aperture of the first gas permeable hole 491 may be less than or equal to the aperture of the vent hole on the battery cell.

In one embodiment, the connecting member 42 may be a metal member, a resin member, or the like. The material of the metal member may be copper, iron, aluminum, steel, aluminum alloy, or the like. Adoption of the connecting member 42 as a metal member facilitates welded connection between the connecting member 42 and the wall portion. The following description of the solution of the present application takes the connecting member 42 as a metal member 42 as an example, such exemplary description shall not be construed as a limitation on this solution, and this solution is still applicable to connecting members of non-metallic materials.

As shown in (a) of FIG. 11, the gas permeable membrane 41 may be directly disposed on the surface of the metal member 42. In other embodiments, a recessed platform may also be provided on the metal member 42.

Referring to (b) of FIG. 11, according to some embodiments of the present application, the metal member 42 has a first annular table surface T1 recessed relative to the surface of the metal member 42. The first annular table surface T1 is arranged around the first gas permeable hole 491, and the gas permeable membrane 41 is disposed on the first annular table surface T1. Such a configuration can reduce the installation height of the gas permeable membrane assembly 40.

According to some embodiments of the present application, the gas permeable membrane assembly 40 further includes a backing member 43. The backing member 43 is disposed between the gas permeable membrane 41 and the metal member 42. The gas permeation rate of the backing member 43 is greater than the gas permeation rate of the gas permeable membrane 41.

The gas permeable membrane assembly 40 includes a gas permeable membrane 41, a metal member 42, and a backing member 43. The gas permeable membrane 41 is disposed on the metal member 42. The backing member 43 is disposed between the gas permeable membrane 41 and the metal member 42. The backing member 43 is configured to support the gas permeable membrane 41 and allow gas flowing through the gas permeable membrane 41 to pass through.

The backing member 43 may play a supporting role for the gas permeable membrane 41 and reduce the risk of deformation of the gas permeable membrane 41. The backing member 43 is made of a material with better gas permeability than the gas permeable membrane 41 so as not to affect the gas permeation process of the gas permeable membrane 41. The backing member 43 also has the characteristics such as corrosion resistance and high temperature resistance. The material selection of the backing member 43 is rich, including porous polymers such as polypropylene, polyamide, polytetrafluoroethylene, and fluorinated ethylene propylene, and may also be metal-organic framework porous materials, carbon films, and ceramic porous materials, or the like, which are not limited herein.

As shown in (c) of FIG. 11, the metal member 42 also has a second annular table surface T2 recessed relative to the surface of the metal member 42. The second annular table surface T2 is arranged around the first gas permeable hole 491, and the backing member 43 is disposed on the second annular table surface T2. The second annular table surface T2 carries the backing member 43, and the gas permeable membrane 41 may be directly attached to the surface of the metal member 42. In this way, since the gas permeable membrane 41 has a small thickness, its influence on the overall height of the gas permeable membrane assembly 40 is relatively small. By reducing the arrangement of the recessed surface on the metal member 42, the manufacturing process can be simplified, and the strength of the metal member 42 can also be improved.

As shown in (d) of FIG. 11, the metal member 42 has a first annular table surface T1 and a second annular table surface T2 that are recessed relative to the surface of the metal member 42, and a transition surface T3. The first annular table surface T1 is arranged around the second annular table surface T2. The transition surface T3 connects the first annular table surface T1 and the second annular table surface T2. The first annular table surface T1 is closer to a surface of the metal member 42 than the second annular table surface T2. The second annular table surface T2 is arranged around the first gas permeable hole 491. The backing member 43 is disposed on the second annular table surface T2, and the gas permeable membrane 41 is disposed on the first annular table surface T1.

The first annular table surface T1 and the second annular table surface T2 are formed by recessing inward from the surface of the metal member 42. The metal member 42 may be stamped to form the recessed first annular table surface T1 and second annular table surface T2, or the metal member 42 may be etched to remove part of the structure to form the recessed first annular table surface T1 and second annular table surface T2. A recess depth of the first annular table surface T1 and the second annular table surface T2 relative to the surface of the metal member 42 may be set according to the thicknesses of the gas permeable membrane 41 and the backing member 43. Preferably, a recess depth of the second annular table surface T2 relative to the first annular table surface T1 (that is, the height of the transition surface T3) is equal to a thickness of the backing member 43, so that the second annular table may accommodate the backing member 43, and a surface of the backing member 43 facing the gas permeable membrane 41 is flush with the first annular table surface T1. Further, the recess depth of the first annular table surface T1 relative to the surface of the metal member 42 is equal to the thickness of the gas permeable membrane 41, so that the first annular table may accommodate the gas permeable membrane 41, and a surface of the gas permeable membrane 41 away from the metal member 42 is flush with the surface of the metal member 42.

By providing a recessed platform on the metal member 42, the surface of the gas permeable membrane 41 may be flush with the surface of the metal member 42, reducing the overall height of the gas permeable membrane assembly 40, thereby reducing the installation height of the gas permeable membrane assembly 40.

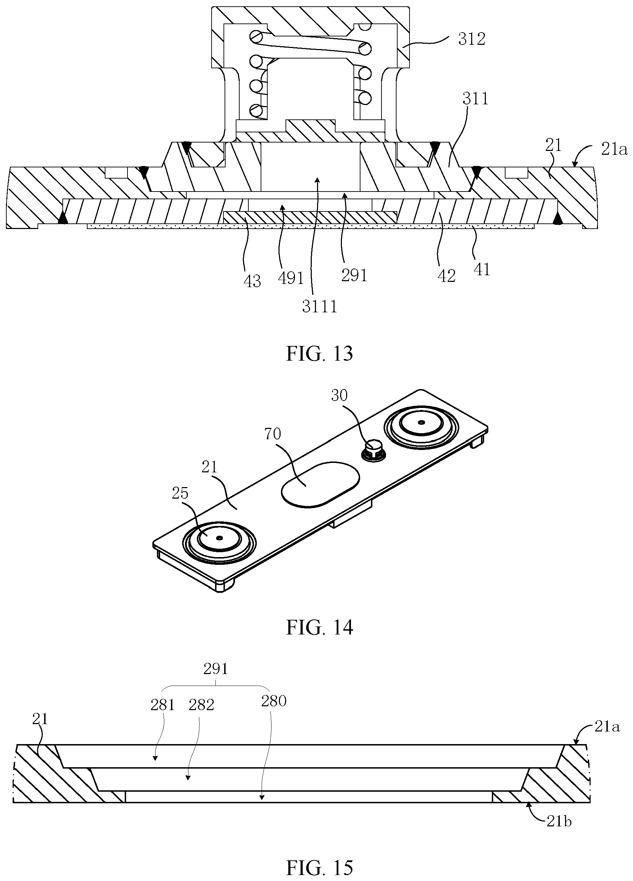

Referring to FIG. 12, FIG. 13, and FIG. 14 in combination, FIG. 12 is a schematic partial cross-sectional structural view of an end cap according to one or more embodiments; FIG. 13 is a schematic cross-sectional structural view of a battery cell according to one or more embodiments; and FIG. 14 is a schematic front view of an end cap of a battery cell according to one or more embodiments.

According to some embodiments of the present application, the one-way valve 30 is disposed on the end cap 21. The valve body 31 of the one-way valve 30 faces the exterior of the housing and at least a portion of the valve body 31 protrudes from the outer surface 21a of the end cap 21. The gas permeable membrane assembly 40 is disposed on the side of the end cap 21 facing the interior of the housing. The one-way valve 30 and the gas permeable membrane assembly 40 are independently connected to the end cap 21.

According to some embodiments of the present application, the end cap 21 is provided with a first vent hole 291. The first vent hole 291 includes a through hole section 280 and a first hole section 281. The through hole section 280 and the first hole section 281 are arranged along a thickness direction of the end cap 21. The through hole section 280 communicates the interior of the housing with the exterior of the housing. The first hole section 281 is located on the side of the through hole section 280 away from the interior of the housing. An aperture of the first hole section 281 is larger than an aperture of the through hole section 280. The one-way valve 30 is at least partially accommodated in the first hole section 281. The valve body 31 of the one-way valve 30 faces the exterior of the housing and at least a portion of the valve body 31 protrudes from the outer surface 21a of the end cap 21. As shown in FIG. 12, the first vent hole 291 is a counterbore recessed relative to the outer surface 21a of the end cap 21. When the one-way valve 30 is connected to the end cap 21, part of the structure of the one-way valve 30 may be embedded in the first vent hole 291 to reduce the installation height.

According to some embodiments of the present application, the one-way valve 30 is welded to the end cap 21. As shown in FIG. 13, the valve seat 311 of the one-way valve 30 may be used to weld to the end cap 21; specifically, the valve cover 312 of the one-way valve 30 is connected to the valve seat 311, and the valve seat 311 is welded to the end cap 21.

According to some embodiments of the present application, the gas permeable membrane assembly 40 includes a gas permeable membrane 41 and a metal member 42. The gas permeable membrane 41 is disposed on the metal member 42. The gas permeable membrane assembly 40 is disposed on the end cap 21, and the metal member 42 is connected to the end cap 21. That is, the gas permeable membrane 41 is connected to the end cap 21 through the metal member 42. The metal member 42 may be connected to the end cap 21 through welding, interference fit, and the like. In this way, the connection strength between the gas permeable membrane assembly 40 and the end cap 21 can be enhanced.

Still referring to FIG. 13 and FIG. 14, according to some embodiments of the present application, the end cap 21 has an outer surface 21a and an inner surface 21b that are arranged opposite to each other. The outer surface 21a is arranged toward the exterior of the housing, and the inner surface 21b is arranged toward the interior of the housing. The end cap 21 has a first recessed platform S1 recessed relative to the inner surface 21b. The first recessed platform S1 is arranged around the first vent hole 291, and the gas permeable membrane assembly 40 is at least partially accommodated in the first recessed platform S1.

The first recessed platform S1 is formed by recessing from the inner surface 21b of the end cap 21 toward the outer surface 21a of the end cap 21. The end cap 21 may be stamped to form the first recessed platform S1, or the end cap 21 may be etched to remove part of the structure to form the first recessed platform S1. A recess depth of the first recessed platform S1 relative to the inner surface 21b of the end cap 21 may be set according to a thickness of the gas permeable membrane assembly 40. The thickness of the gas permeable membrane assembly 40 is an overall thickness including the gas permeable membrane 41, the metal member 42, and the backing member 43. As mentioned above, the gas permeable membrane 41 and the backing member 43 may be accommodated in the annular table recessed relative to the surface of the metal member 42 on the metal member 42, that is, the overall thickness of the gas permeable membrane assembly 40 may be equal to the thickness of the metal member 42. Preferably, the recess depth of the first recessed platform S1 relative to the inner surface 21b of the end cap 21 is equal to the thickness of the gas permeable membrane assembly 40, so that the gas permeable membrane assembly 40 is accommodated in the first recessed platform S1, and a surface of the gas permeable membrane assembly 40 facing the interior of the housing is flush with the inner surface 21b of the end cap 21. In this way, the installation height of the gas permeable membrane assembly 40 can be reduced, thereby reducing occupied internal space of the housing of the battery cell 20 and improving the space utilization rate inside the housing.

As shown in FIG. 13, the gas permeable membrane 41 may be disposed on the side of the metal member 42 facing the interior of the housing; that is, the gas permeable membrane 41 is below the metal member 42. Such a configuration can reduce the influence of the working external environment of the battery cell 20 on the gas permeable membrane 41. In other embodiments, the gas permeable membrane 41 may also be disposed on a side of the metal member 42 facing the exterior of the housing, that is, the gas permeable membrane 41 is disposed between the metal member 42 and the end cap 21 Such a configuration can reduce the erosion of the gas permeable membrane 41 by the electrolyte solution system.

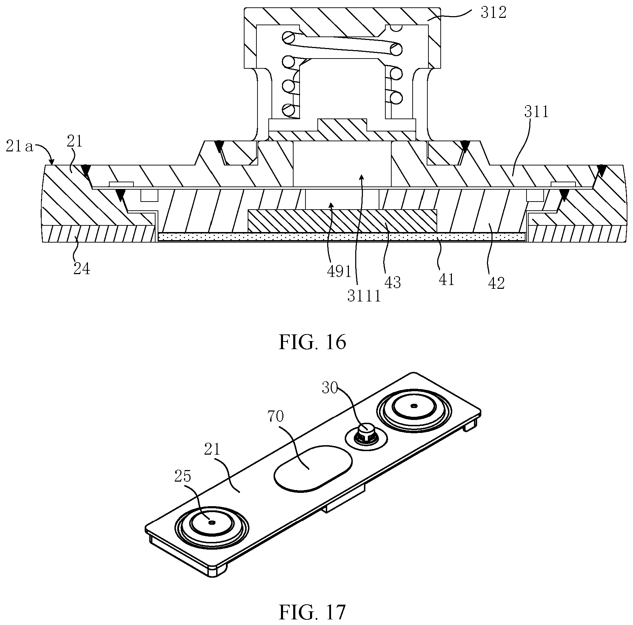

Referring to FIG. 15, FIG. 16, and FIG. 17 in combination, FIG. 15 is a schematic partial cross-sectional structural view of an end cap according to one or more embodiments; FIG. 16 is a schematic cross-sectional structural view of a battery cell according to one or more embodiments; and FIG. 17 is a schematic front view of an end cap of a battery cell according to one or more embodiments.

According to some embodiments of the present application, the one-way valve 30 is disposed on the end cap 21. The valve body 31 of the one-way valve 30 faces the exterior of the housing and at least a portion of the valve body 31 protrudes from the outer surface 21a of the end cap 21. The gas permeable membrane assembly 40 is disposed on a side of the end cap 21 facing the exterior of the housing. The one-way valve 30 and the gas permeable membrane assembly 40 are independently connected to the end cap 21.

As mentioned above, the end cap 21 is provided with a first vent hole 291. The first vent hole 291 includes a first hole section 281. The one-way valve 30 is at least partially accommodated in the first hole section 281, and the valve body 31 of the one-way valve 30 faces the exterior of the housing, and at least a portion of the valve body 31 protrudes from the outer surface 21a of the end cap 21. In this embodiment, the gas permeable membrane assembly 40 is disposed on a side of the end cap 21 facing the exterior of the housing. At least a portion of the gas permeable membrane assembly 40 is accommodated in the first vent hole 291, and the gas permeable membrane assembly 40 is located on the side of the one-way valve 30 facing the end cap 21.

Specifically, the first vent hole 291 further includes a second hole section 282. Along the thickness direction of the end cap 21, the second hole section 282 is located between the through hole section 280 and the first hole section 281. The aperture of the second hole section 282 is smaller than the aperture of the first hole section 281. The aperture of the second hole section 282 is larger than the aperture of the through hole section 280. The gas permeable membrane assembly 40 is at least partially accommodated in the second hole section 282.

According to some embodiments of the present application, the gas permeable membrane assembly includes a gas permeable membrane and a connecting member. The connecting member is provided with a first gas permeable hole. The gas permeable membrane is disposed on the connecting member and covers the first gas permeable hole. The gas permeable membrane is configured to allow internal gas of the battery cell to pass through the gas permeable membrane and be discharged. The connecting member may be a sheet-like member or a metal member.

In one embodiment, the gas permeable membrane assembly 40 includes a gas permeable membrane 41 and a metal member 42. The metal member 42 is provided with a first gas permeable hole 491. The gas permeable membrane 41 is disposed on the metal member 42 and covers the first gas permeable hole 491. The metal member 42 is welded to the end cap 21.

According to some embodiments of the present application, the one-way valve 30 may be disposed on the end cap 21. The valve body 31 of the one-way valve 30 faces the interior of the housing and at least a portion of the valve body 31 protrudes from the inner surface 21b of the end cap 21. The gas permeable membrane assembly 40 is connected to the one-way valve 30, and the one-way valve 30 is connected to the end cap 21. That is, the one-way valve 30 and the gas permeable membrane assembly 40 are first assembled together and then connected to the end cap 21.

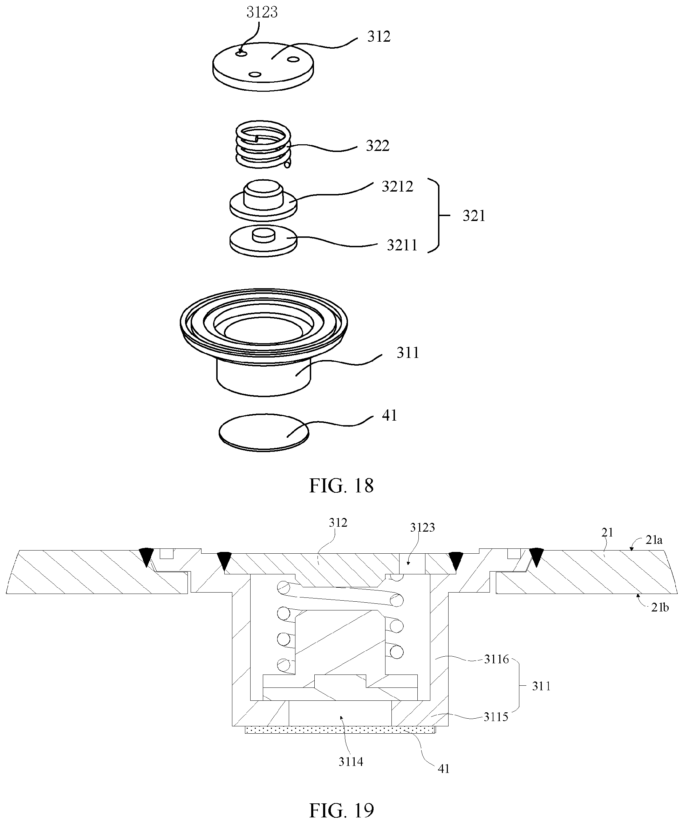

Referring to FIG. 18 and FIG. 19 in combination, FIG. 18 is a schematic exploded structural view of a venting assembly according to one or more embodiments; and FIG. 19 is a schematic cross-sectional structural view of a venting assembly according to one or more embodiments. According to some embodiments of the present application, the gas permeable membrane 41 assembly is disposed on the side of the seat bottom wall 3115 of the one-way valve 30 away from the valve cavity 313. The gas permeable membrane assembly 40 includes a gas permeable membrane 41. The gas permeable membrane 41 is connected to the seat bottom wall 3115, and the gas permeable membrane 41 covers the fourth through hole 3114. In this embodiment, the gas permeable membrane assembly 40 is compounded with the one-way valve 30. The gas permeable membrane 41 is attached to the seat bottom wall 3115 of the one-way valve 30, which can reduce the installation height. In addition, only the one-way valve 30 needs to be connected to the end cap 21, which can simplify the assembly process.

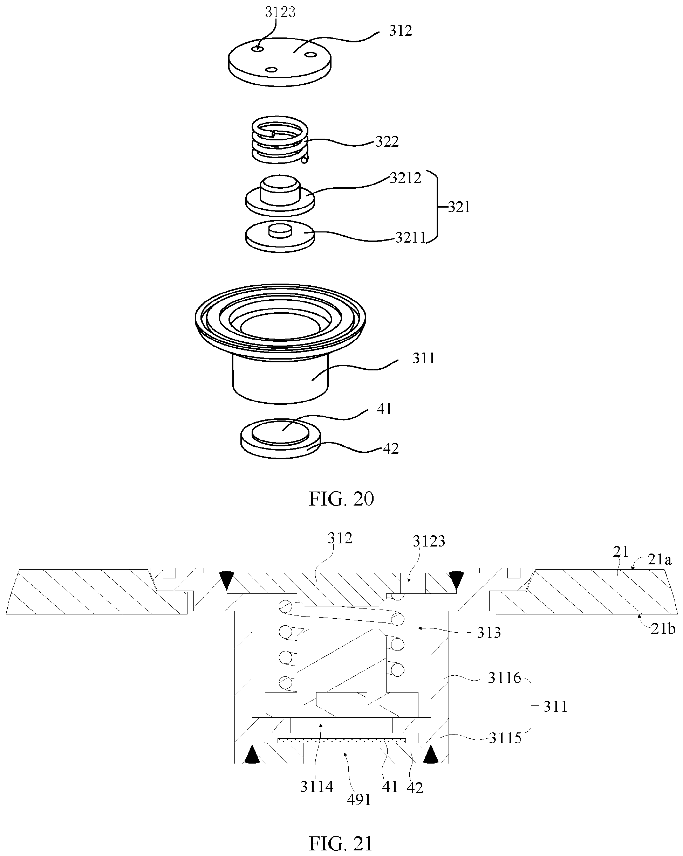

Referring to FIG. 20 and FIG. 21 in combination, FIG. 20 is a schematic exploded structural view of a venting assembly according to one or more embodiments; and FIG. 21 is a schematic cross-sectional structural view of a venting assembly according to one or more embodiments. According to some embodiments of the present application, the gas permeable membrane assembly 40 is disposed on a side of the seat bottom wall 3115 of the one-way valve 30 away from the valve cavity 313. The gas permeable membrane assembly 40 includes a gas permeable membrane 41 and a metal member 42. The metal member 42 is provided with a first gas permeable hole 491. The gas permeable membrane 41 is disposed on the metal member 42 and covers the first gas permeable hole 491. The metal member 42 is connected to the seat bottom wall 3115. In this embodiment, the connection between the metal member 42 and the seat bottom wall 3115 can improve the connection strength.

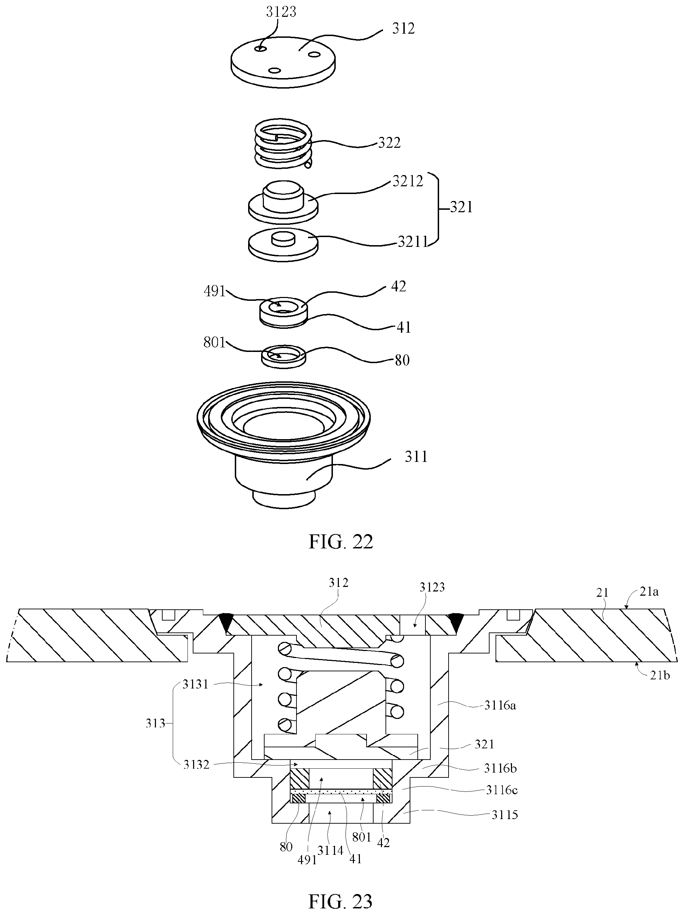

Referring to FIG. 22 and FIG. 23 in combination, FIG. 22 is a schematic exploded structural view of a venting assembly according to one or more embodiments; and FIG. 23 is a schematic cross-sectional structural view of a venting assembly according to one or more embodiments. According to some embodiments of the present application, the gas permeable membrane assembly 40 is disposed on a side of the seat bottom wall 3115 facing the valve cavity 313.

The valve cavity 313 includes a first cavity 3131 and a second cavity 3132 that are connected to each other. The second cavity 3132 is closer to the seat bottom wall 3115. Along a direction parallel to the seat bottom wall 3115, a cross-sectional area of the first cavity 3131 is larger than a cross-sectional area of the second cavity 3132. The valve core 32 is located in the first cavity 3131, and the gas permeable membrane assembly 40 is located in the second cavity 3132. Through such a configuration, after the gas enters the valve cavity, it first passes through the gas permeable membrane assembly and then reaches the valve core, which can block the overflow of the electrolyte solution.

Further, the seat side wall 3116 includes a first side wall portion 3116a, a second side wall portion 3116b, and a third side wall portion 3116c. The first side wall portion 3116a and the second side wall portion 3116b enclose the first cavity 3131. The third side wall portion 3116c and the seat bottom wall 3115 enclose the first cavity 3131. The blocking member 321 of the valve core 32 abuts against the second side wall portion 3116b. In this embodiment, the second cavity 3132 is an open cavity to communicate with the first cavity 3131. The blocking member 321 of the valve core 32 located in the first cavity 3131 abuts against the second side wall portion 3116b to seal the second cavity 3132 with the blocking member 321. When the internal pressure of the battery cell is low, the gas cannot enter the first cavity 3131 from the second cavity 3132. When the internal pressure of the battery cell is high, the gas enters the second cavity 3132, pushes open the blocking member 321 to enter the first cavity 3131, and then is discharged from the gas outlet of the valve cavity 313.

Still referring to FIG. 23, according to some embodiments of the present application, the gas permeable membrane assembly 40 is located in the second cavity 3132, so that when the gas passes through the second cavity 3132 and is discharged from the first cavity 3131, it first passes through the gas permeable membrane assembly 40.

The gas permeable membrane assembly 40 may include only a gas permeable membrane 41. The gas permeable membrane 41 is attached to the side of the seat bottom wall 3115 facing the valve cavity 313 and covers the fourth through hole 3114. In this case, the gas entering from the fourth through hole 3114 passes through the gas permeable membrane 41 to prevent the electrolyte solution from entering the second cavity 3132.

In another embodiment, the gas permeable membrane assembly 40 may further include a gas permeable membrane 41 and a metal member 42. The gas permeable membrane 41 is disposed on the metal member 42. The connection between the metal member 42 and the wall of the second cavity 3132 (the third side wall portion 3116c) can improve the stability of the connection and prevent the gas permeable membrane 41 from being displaced by the gas.

The gas permeable membrane 41 may be disposed on a side of the metal member 42 facing the seat bottom wall 3115, so that the metal member 42 has a supporting force on the gas permeable membrane 41 to prevent the gas permeable membrane 41 from being displaced by the gas. In other embodiments, the gas permeable membrane 41 may also be disposed on a side of the metal member 42 away from the seat bottom wall 3115.

Still referring to FIG. 23, according to some embodiments of the present application, when the gas permeable membrane 41 is disposed on a side of the metal member 42 facing the seat bottom wall 3115, a surface of the metal member 42 away from the gas permeable membrane 41 is lower than a surface of the second side wall portion 3116b. Through such a configuration, there may be a certain cavity between the metal member 42 and the blocking member 321, which facilitates the discharge of gas.

Still referring to FIG. 23, according to some embodiments of the present application, the battery cell 20 further includes a sealing ring 80. The sealing ring 80 is disposed between the gas permeable membrane assembly 40 and the seat bottom wall 3115. Such a configuration can reduce the sealing between the gas permeable membrane assembly 40 and the seat bottom wall 3115.

Further, the sealing ring 80 is disposed between the gas permeable membrane 41 and the seat bottom wall 3115. The sealing ring 80 is arranged around the fourth through hole 3114. The sealing ring 80 is provided with a second gas permeable hole 801. An aperture of the second gas permeable hole 801 is larger than an aperture of the fourth through hole 3114. The gas permeable membrane 41 covers the second gas permeable hole 801. Such a configuration can improve the sealing performance between the gas permeable membrane 41 and the seat bottom wall 3115 and preventing the sealing ring 80 from blocking the flow of gas.

According to some embodiments of the present application, the metal member 42 is welded to the third side wall portion 3116c; or the metal member 42 is interference-fitted with the third side wall portion 3116c.

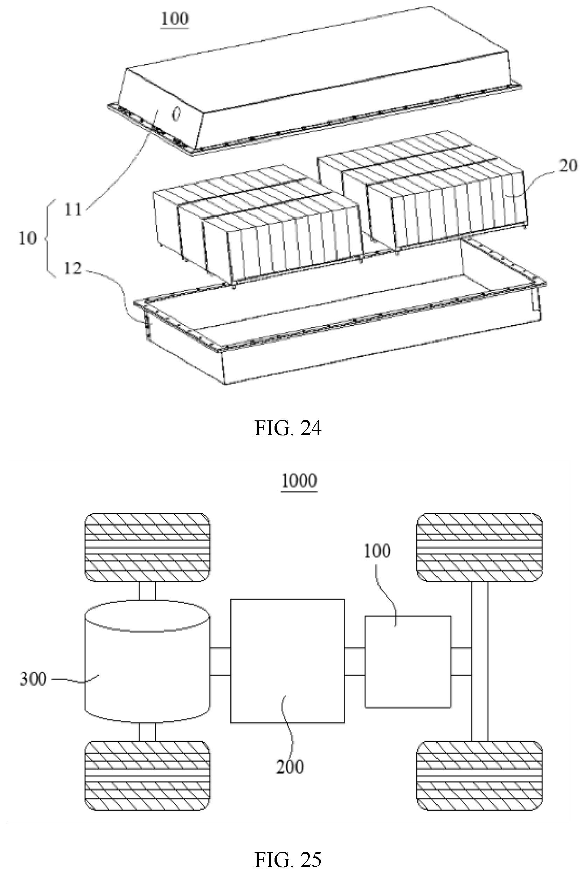

According to some embodiments of the present application, the present application further provides a battery 100. The battery 100 includes the battery cell 20 according to any of the above solutions. Referring to FIG. 24, FIG. 24 is a schematic exploded structural view of a battery according to one or more embodiments. The battery 100 includes a case 10 and a battery cell 20. The battery cell 20 is accommodated in the case 10. The case 10 is configured to provide an accommodating space for the battery cell 20. The case 10 may adopt various structures. In some embodiments, the case 10 may include a first part 11 and a second part 12. The first part 11 and the second part 12 cover each other. The first part 11 and the second part 12 jointly define an accommodating space for accommodating the battery cell 20. The second part 12 may be a hollow structure with one end open. The first part 11 may be a plate-like structure. The first part 11 covers the open side of the second part 12 so that the first part 11 and the second part 12 jointly define the accommodating space. The first part 11 and the second part 12 may alternatively be hollow structures with one side open. The open side of the first part 11 covers the open side of the second part 12. Certainly, the case 10 formed by the first part 11 and the second part 12 may have various shapes, such as a cylinder and a rectangular parallelepiped.

In the battery 100, there may be a plurality of battery cells 20. The plurality of battery cells 20 may be connected in series or in parallel or in a mixed connection. A mixed connection means that there are both series and parallel connections among the plurality of battery cells 20. The plurality of battery cells 20 may be directly connected in series or in parallel or in a mixed connection, and then the whole formed by the plurality of battery cells 20 is accommodated in the case 10. Certainly, the battery 100 may alternatively be that the plurality of battery cells 20 are first connected in series or in parallel or in a mixed connection to form a battery module, and a plurality of battery modules are then connected in series or in parallel or in a mixed connection to form a whole and accommodated in the case 10. The battery 100 may further include other structures. For example, the battery 100 may further include a busbar component for realizing electrical connections between a plurality of battery cells 20.

Each battery cell 20 may be a secondary battery or a primary battery; its specific examples include all types of primary batteries or secondary batteries. For example, it may be different types of secondary batteries such as lithium batteries, sodium batteries, and potassium batteries. Lithium secondary batteries may include lithium metal secondary batteries, lithium-ion secondary batteries, lithium polymer secondary batteries, or lithium-ion polymer secondary batteries. It may also be a lithium-sulfur battery, a sodium-ion battery, or a magnesium-ion battery, but is not limited thereto. The battery cell 20 may be in a shape of a cylinder, a flat body, a rectangular parallelepiped, or other shapes.

In some embodiments, the battery may be an energy storage device. Energy storage devices include energy storage containers, energy storage cabinets, and the like.

According to some embodiments of the present application, the present application further provides an electric device. The electric device includes the battery cell according to any of the above solutions, and the battery cell is configured to provide electric energy for the electric device. The electric device may be any device or system that uses the battery cell in any of the foregoing applications.

In some embodiments, the use of the electric device of the present application is not particularly limited, and the electric device may be used in any electronic device known in the prior art. The battery disclosed in the embodiments of the present application may be used in electric devices that use batteries as power sources or in various energy storage systems that use batteries as energy storage elements. That is, an electric device is provided. In some embodiments, the electric device of the present application may be used in, but is not limited to, notebook computers, pen-input computers, mobile computers, e-book players, portable phones, portable fax machines, portable copiers, portable printers, head-mounted stereo headphones, video recorders, liquid crystal display televisions, portable cleaners, portable CD players, mini discs, transceivers, electronic notebooks, calculators, memory cards, portable tape recorders, radios, backup power supplies, motors, automobiles, motorcycles, power-assisted bicycles, bicycles, ships, spacecraft, lighting fixtures, toys, game consoles, clocks, electric tools, flashlights, cameras, large household batteries, and lithium-ion capacitors.

The electric device may select a battery cell, a battery module, or a battery pack according to its use requirements.

Referring to FIG. 25, FIG. 25 is a schematic structural view of a vehicle according to one or more embodiments. The vehicle 1000 may be a fuel vehicle, a gas vehicle, or a new energy vehicle. The new energy vehicle may be a battery electric vehicle, a hybrid electric vehicle, an extended-range electric vehicle, or the like. A battery 100 is provided inside the vehicle 1000. The battery 100 may be arranged at the bottom, head, or tail of the vehicle 1000. The battery 100 may be configured to supply power to the vehicle 1000. For example, the battery 100 may be used as an operating power source for the vehicle 1000. The vehicle 1000 may further include a controller 200 and a motor 300. The controller 200 is configured to control the battery 100 to supply power to the motor 300, for example, to meet the working power requirements for starting, navigation, and driving of the vehicle 1000.

In some embodiments of the present application, the battery 100 may not only be used as an operating power source for the vehicle 1000, but may also be used as a driving power source for the vehicle 1000, replacing or partially replacing fuel or natural gas to provide driving power for the vehicle 1000.

The above is merely the implementation of the present application and does not therefore limit the patent scope of the present application. Any equivalent structure or equivalent process transformation made by using the contents of the description and accompanying drawings of the present application, or directly or indirectly applied in other related technical fields, shall be similarly included in the patent protection scope of the present application.

## Claims

1. A battery cell, **characterized in that** the battery cell comprises:
a housing having a wall portion and an accommodating cavity;
a venting assembly disposed on the wall portion, the venting assembly being configured to discharge internal gas of the housing; and
an electrolyte solution filled in the accommodating cavity;
wherein the electrolyte solution comprises a first component, and the first component comprises one of or a mixture of two or more of dimethyl carbonate, 2-methyltetrahydrofuran, diethylene glycol dimethyl ether, diethylene glycol dimethyl ether, succinonitrile, glutaronitrile, methyl formate, ethyl formate, methyl acetate, ethyl acetate, methyl acrylate, dimethyl sulfite, diethyl sulfite, ethyl methyl sulfite, 3-methyl-2-butanone, and 3-methyl-2-butanone.

2. The battery cell according to claim 1, **characterized in that**, based on a total mass of the electrolyte solution, a content of the first component is 5% to 85%.

3. The battery cell according to claim 1 or 2, **characterized in that** the content of the first component is 15% to 35%.

4. The battery cell according to claim 1 or 2, **characterized in that**, based on the total mass of the electrolyte solution, the content of the first component is 65% to 85%.

5. The battery cell according to any one of claims 1 to 4, **characterized in that** the battery cell further comprises an electrode assembly, wherein the electrode assembly is accommodated in the accommodating cavity, the electrode assembly comprises a negative electrode sheet, the negative electrode sheet comprises a negative electrode active material, and the negative electrode active material comprises a silicon-based material.

6. The battery cell according to claim 5, **characterized in that**, based on a total mass of the negative electrode active material, a silicon content is lower than or equal to 5%; the electrolyte solution further comprises fluoroethylene carbonate, and based on the total mass of the electrolyte solution, a content of the fluoroethylene carbonate is lower than or equal to 3%.

7. The battery cell according to claim 5, **characterized in that**, based on a total mass of the negative electrode active material, a silicon content is higher than 5%; the electrolyte solution further comprises fluoroethylene carbonate, and based on the total mass of the electrolyte solution, a content of the fluoroethylene carbonate is higher than 3%.

8. The battery cell according to any one of claims 1 to 7, **characterized in that**
the battery cell further comprises an electrode assembly, wherein the electrode assembly is accommodated in the accommodating cavity, the electrode assembly comprises a positive electrode sheet, the positive electrode sheet comprises a positive electrode active material, the positive electrode active material comprises a first type of material, the first type of material comprises a first ternary material, and a mass content of nickel in the first ternary material is not less than 50% and less than 100%.

9. The battery cell according to claim 8, **characterized in that** a median particle size Dv50 of the first ternary material is 2 µm to 4 µm.

10. The battery cell according to claim 8 or 9, **characterized in that** a mass content of cobalt in the first ternary material is 12% to 18%.

11. The battery cell according to any one of claims 8 to 10, **characterized in that**, based on a total mass of the positive electrode active material, a content of the first ternary material is higher than or equal to 50%.

12. The battery cell according to any one of claims 8 to 11, **characterized in that** the first ternary material comprises one or more of single crystal particles and polycrystalline particles.

13. The battery cell according to any one of claims 8 to 12, **characterized in that** the positive electrode active material further comprises a lithium manganese iron phosphate material.

14. The battery cell according to any one of claims 8 to 13, **characterized in that** a thickness of the positive electrode active material is greater than or equal to 130 µm.

15. The battery cell according to any one of claims 1 to 14, **characterized in that**
the venting assembly comprises a gas permeable membrane assembly, the gas permeable membrane assembly comprises a gas permeable membrane, and a gas permeation rate of the gas permeable membrane is 0.025 mL/day to 8 mL/day.

16. The battery cell according to claim 15, **characterized in that**
the gas permeable membrane assembly comprises the gas permeable membrane and a connecting member, wherein the connecting member is provided with a first gas permeable hole, the gas permeable membrane is disposed on the connecting member and covers the first gas permeable hole, and the gas permeable membrane is configured to allow internal gas of the battery cell to pass through the gas permeable membrane and be discharged.

17. The battery cell according to claim 15 or 16, **characterized in that**
the venting assembly comprises a one-way valve, wherein an opening pressure of the one-way valve is greater than or equal to 0.2 MPa; optionally, greater than or equal to 0.4 MPa; and further optionally, greater than or equal to 0.8 MPa.

18. The battery cell according to claim 17, **characterized in that**
the venting assembly comprises the gas permeable membrane assembly and the one-way valve, the wall portion has a first vent hole, the first vent hole communicates the interior of the housing with the exterior of the housing, and the battery cell is configured such that gas discharged through the first vent hole flows through the one-way valve and the gas permeable membrane assembly.

19. The battery cell according to claim 18, **characterized in that**
the wall portion has an outer surface and an inner surface that are arranged opposite to each other, wherein the outer surface is arranged toward the exterior of the housing, the inner surface is arranged toward the interior of the housing; and the first vent hole comprises a through hole section and a first hole section, wherein the through hole section and the first hole section are arranged along a thickness direction of the wall portion, the through hole section communicates the interior of the housing with the exterior of the housing, the first hole section is located on a side of the through hole section away from the interior of the housing, an aperture of the first hole section is larger than an aperture of the through hole section, and the one-way valve is at least partially accommodated in the first hole section.

20. The battery cell according to claim 19, **characterized in that**
at least a portion of a valve body of the one-way valve protrudes from the outer surface; the wall portion has a first recessed platform recessed relative to the inner surface, the first recessed platform surrounds the through hole section of the first vent hole, and the gas permeable membrane assembly is at least partially accommodated in the first recessed platform.

21. The battery cell according to claim 19, **characterized in that**
at least a portion of a valve body of the one-way valve protrudes from the outer surface; the first vent hole further comprises a second hole section, along the thickness direction of the wall portion, the second hole section is located between the through hole section and the first hole section, an aperture of the second hole section is smaller than an aperture of the first hole section, the aperture of the second hole section is larger than the aperture of the through hole section, the gas permeable membrane assembly is at least partially accommodated in the second hole section, and the gas permeable membrane assembly is located on a side of the one-way valve facing the wall portion.

22. The battery cell according to claim 19, **characterized in that**
the one-way valve comprises a valve body, at least a portion of the valve body protrudes from the inner surface of the wall portion, the valve body comprises a valve seat and a valve cover, the valve seat comprises a seat bottom wall and a seat side wall connected to the seat bottom wall; the valve cover is disposed at an end of the valve seat away from the seat bottom wall, the valve cover, the seat side wall, and the seat bottom wall enclose a valve cavity, and a gas inlet of the valve cavity is provided on the valve seat; wherein
the gas permeable membrane assembly is disposed on a side of the seat bottom wall away from the valve cavity; or
the gas permeable membrane assembly is disposed on a side of the seat bottom wall facing the valve cavity.

23. The battery cell according to claim 15 or 16, **characterized in that**
the venting assembly comprises the gas permeable membrane assembly and the one-way valve, the wall portion has a first vent hole and a second vent hole that are spaced apart, the first vent hole and the second vent hole respectively communicate the interior of the housing with the exterior of the housing, the battery cell is configured such that gas discharged through the first vent hole flows through the one-way valve, and gas discharged through the second vent hole flows through the gas permeable membrane assembly.

24. The battery cell according to any one of claims 1 to 14, **characterized in that**
the venting assembly comprises a one-way valve, wherein an opening pressure of the one-way valve is greater than or equal to 0.2 MPa; optionally, greater than or equal to 0.4 MPa; and further optionally, greater than or equal to 0.8 MPa.

25. The battery cell according to claim 24, **characterized in that**
the one-way valve comprises a valve body and a valve core, wherein the valve body has a valve cavity inside, the valve body is provided with a gas inlet and a gas outlet, the gas inlet is configured to communicate the valve cavity with the interior of the housing, and the gas outlet is configured to communicate the valve cavity with the exterior of the housing; and the valve core is disposed in the valve cavity, the valve core is configured to block a gas inlet channel of the valve cavity, and the valve core is configured to open the gas inlet channel under the action of internal gas of the housing.

26. A battery, **characterized in that** the battery comprises the battery cell according to any one of claims 1 to 25.

27. An electric device, **characterized in that** the electric device comprises the battery cell according to any one of claims 1 to 25, and the battery cell is configured to provide electric energy.
